# EUROPEAN PATENT APPLICATION

(11) **EP 4 475 472 A1**
(43) Date of publication of application: **11.12.2024**
(21) Application number: 23769571.3
(22) Date of filing: 02.03.2023
(51) Int. Cl.: H04L 5/00, H04N 19/103

(54) **COMMUNICATION METHOD AND RELATED DEVICE**

(30) Priority: 14.03.2022 CN 202210248453
(71) Applicant: Huawei Technologies Co., Ltd., Shenzhen, Guangdong 518129 (CN)
(72) Inventor: YU, Jian, Shenzhen, Guangdong 518129 (CN); LI, Jiahui, Shenzhen, Guangdong 518129 (CN); MA, Mengyao, Shenzhen, Guangdong 518129 (CN); GAN, Ming, Shenzhen, Guangdong 518129 (CN)
(74) Representative: Körber, Martin Hans
(86) International application number: PCT/CN2023/079298
(87) International publication number: WO 2023/174065

(57) **Abstract**

This application provides a communication method and a related apparatus. The method includes: generating a physical layer protocol data unit PPDU, where the PPDU includes a first signal field, the first signal field includes a resource unit allocation subfield and at least one user field corresponding to each user, the resource unit allocation subfield indicates a frequency domain resource allocated to the user corresponding to each user field, the user corresponding to each user field includes a first user that uses joint source and channel coding, the PPDU further includes a second signal field of the first user that uses joint source and channel coding, the second signal field of the first user indicates a joint source and channel coding parameter of a source layer corresponding to the first user, and the second signal field of the first user is located on a frequency domain resource allocated to the first user; and sending the PPDU. Embodiments of this application are implemented, so that complexity of reading a signal field by all users can be reduced.

## Description

This application claims priority to Chinese Patent Application No. 202210248453.0, filed with the China National Intellectual Property Administration on March 14, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Currently, a joint source and channel coding (joint source and channel coding, JSCC) technology is proposed to improve quality of wireless video or picture transmission. When the JSCC technology is applied to some of a plurality of users, a JSCC signal field needs to be carried in a broadcast signal field, so that all the users can receive the signal field. A signal field received by a user that uses JSCC transmission includes JSCC-related signal information; and a signal field received by a user that does not use JSCC transmission does not include the JSCC-related signal information. However, the JSCC-related signal information occupies many bits, and a length of the JSCC-related signal information may be variable in different physical layer protocol data units (PHY protocol data unit, PPDU). Therefore, for the user that does not use JSCC transmission, lengthy JSCC signal information causes great overheads and affects a throughput rate. In addition, lengths of different user fields are different in one signal field. For example, a length of a user field of the user that uses JSCC transmission is different from a length of a user field of the user that does not use JSCC transmission. Moreover, a length of a user field is variable, which makes it extremely complex for all the users to read the signal field.

### SUMMARY

This application provides a communication method and a related apparatus, to reduce overheads and improve a throughput rate for a user that does not support JSCC transmission while reducing complexity of reading a signal field by all users.

According to a first aspect, a communication method is provided. The method includes: generating a physical layer protocol data unit (physical layer protocol data unit, PPDU), where the PPDU includes a first signal field, the first signal field includes a resource unit allocation subfield and at least one user field corresponding to each user, the resource unit allocation subfield indicates a frequency domain resource allocated to the user corresponding to each user field, the user corresponding to each user field includes a first user that uses joint source and channel coding, the PPDU further includes a second signal field of the first user, the second signal field of the first user indicates a joint source and channel coding parameter of a source layer corresponding to the first user, and the second signal field of the first user is located on a frequency domain resource allocated to the first user; and sending the PPDU. It can be learned that in the foregoing technical solution, the PPDU includes the first signal field, the first signal field includes the resource unit allocation subfield and the at least one user field corresponding to each user, and the resource unit allocation subfield may indicate the frequency domain resource allocated to the user corresponding to each user field. This indicates that frequency domain resources may be allocated to both a user that uses JSCC transmission and that corresponds to each user field and a user that does not use JSCC transmission and that corresponds to each user field. In addition, for the user that uses JSCC transmission, the PPDU may further include the second signal field located on the frequency domain resource allocated to the user, and the second signal field indicates the joint source and channel coding parameter of the source layer corresponding to the user. In other words, it is indicated that, for the user that uses JSCC transmission, JSCC signal information is located in another signal field of the frequency domain resource of the user. Therefore, when reading the first signal field, the user that uses JSCC transmission does not need to read a large amount of information in a same field. This reduces complexity of reading the first signal field by the user that uses JSCC transmission. Moreover, because only the user that uses JSCC transmission can obtain JSCC signal information related to the user, and the user that does not use JSCC transmission does not need to read the JSCC signal information, the user that does not use JSCC transmission need to read fewer signal fields. This further reduces complexity of reading the signal fields by the user that does not use JSCC transmission. Besides, for the user that does not use JSCC transmission, the PPDU does not include the second signal field, that is, there is no lengthy JSCC signal information. This reduces overheads and improves a throughput rate.

According to a second aspect, a communication method is provided. The method includes: receiving a PPDU, where the PPDU includes a first signal field, the first signal field includes a resource unit allocation subfield and at least one user field corresponding to each user, the resource unit allocation subfield indicates a frequency domain resource allocated to the user corresponding to each user field, the user corresponding to each user field includes a first user that uses joint source and channel coding, the PPDU further includes a second signal field of the first user, the second signal field of the first user indicates a joint source and channel coding parameter of a source layer corresponding to the first user, and the second signal field of the first user is located on a frequency domain resource allocated to the first user; obtaining, on the frequency domain resource allocated to the first user, the joint source and channel coding parameter of the source layer corresponding to the first user; and performing joint source and channel decoding based on the joint source and channel coding parameter of the source layer corresponding to the first user. It can be learned that in the foregoing technical solution, for a user that uses JSCC transmission, the PPDU may further include the second signal field located on the frequency domain resource allocated to the user, and the second signal field indicates the joint source and channel coding parameter of the source layer corresponding to the user. In other words, it is indicated that, for the user that uses JSCC transmission, JSCC signal information is located in another signal field of the frequency domain resource of the user. Therefore, when reading the first signal field, the user that uses JSCC transmission does not need to read a large amount of information in a same field. This reduces complexity of reading the first signal field by the user that uses JSCC transmission. Moreover, because only the user that uses JSCC transmission can obtain JSCC signal information related to the user, and the user that does not use JSCC transmission does not need to read the JSCC signal information, the user that does not use JSCC transmission need to read fewer signal fields. This further reduces complexity of reading the signal fields by the user that does not use JSCC transmission. Besides, for the user that does not use JSCC transmission, the PPDU does not include the second signal field, that is, there is no lengthy JSCC signal information. This reduces overheads and improves a throughput rate.

According to a third aspect, a communication apparatus is provided. The apparatus includes a processing module and a transceiver module. The processing module is configured to generate a PPDU, where the PPDU includes a first signal field, the first signal field includes a resource unit allocation subfield and at least one user field corresponding to each user, the resource unit allocation subfield indicates a frequency domain resource allocated to the user corresponding to each user field, and the user corresponding to each user field includes a first user that uses joint source and channel coding. The PPDU further includes a second signal field of the first user, where the second signal field of the first user indicates a joint source and channel coding parameter of a source layer corresponding to the first user, and the second signal field of the first user is located on a frequency domain resource allocated to the first user. The transceiver module is configured to send the PPDU.

According to a fourth aspect, a communication apparatus is provided. The apparatus includes a processing module and a transceiver module. The transceiver module is configured to receive a PPDU, where the PPDU includes a first signal field, the first signal field includes a resource unit allocation subfield and at least one user field corresponding to each user, the resource unit allocation subfield indicates a frequency domain resource allocated to the user corresponding to each user field, and the user corresponding to each user field includes a first user that uses joint source and channel coding. The PPDU further includes a second signal field of the first user, where the second signal field of the first user indicates a joint source and channel coding parameter of a source layer corresponding to the first user, and the second signal field of the first user is located on a frequency domain resource allocated to the first user. The processing module is configured to obtain, on the frequency domain resource allocated to the first user, the joint source and channel coding parameter of the source layer corresponding to the first user. The processing module is further configured to perform joint source and channel decoding based on the joint source and channel coding parameter of the source layer corresponding to the first user.

Optionally, with reference to any one of the first aspect to the fourth aspect, the first signal field further includes indication information indicating that the first user uses joint source and channel coding transmission. It can be learned that, because the first signal field further includes the indication information indicating that the first user uses joint source and channel coding transmission, the first user may learn that the first user further needs to read the second signal field.

Optionally, with reference to any one of the first aspect to the fourth aspect, the indication information indicating that the first user uses joint source and channel coding transmission is in a user field corresponding to the first user. It can be learned that, because the first user may read, in the user field of the first user, the indication information indicating that the first user uses joint source and channel coding transmission, the first user may learn that the first user further needs to read the second signal field.

Optionally, with reference to any one of the first aspect to the fourth aspect, the user field corresponding to the first user further includes a modulation and coding scheme field, and the modulation and coding scheme field indicates that the first user uses joint source and channel coding transmission. It can be learned that the first user may learn of, by reading the modulation and coding scheme field located in the user field of the first user, the indication information indicating that the first user uses joint source and channel coding transmission, and may further learn that the first user further needs to read the second signal field.

Optionally, with reference to any one of the first aspect to the fourth aspect, the resource unit allocation subfield indicates a layer frequency domain resource, at each source layer, of the user corresponding to each user field. It can be learned that this indicates that a layer frequency domain resource at a single source layer may be allocated to the user corresponding to each user field. Therefore, layer frequency domain resources at different source layers are different, and reading, by the user, a field on a layer frequency domain resource of a source layer does not affect reading, by the user, a field on a layer frequency domain resource of another source layer.

Optionally, with reference to any one of the first aspect to the fourth aspect, user fields corresponding to different source layers of the first user use a same station identifier field. It can be learned that different source layers of a user that uses joint source and channel coding may correspond to different user fields.

Optionally, with reference to any one of the first aspect to the fourth aspect, a number of source layers of the first user is equal to a number of user fields that use the same station identifier field, and the station identifier field indicates the first user. It can be learned that the number of user fields that use the same station identifier field may implicitly indicate the number of source layers of the first user. This reduces overheads.

Optionally, with reference to any one of the first aspect to the fourth aspect, the second signal field of the first user further indicates at least one of the following: a number of all source layers of the first user and an identifier of one source layer corresponding to the first user. It can be learned that the user that uses joint source and channel coding may further learn of, based on the second signal field, the number of all the source layers of the user and/or the identifier of one source layer corresponding to the user, so that the user can better read data at the source layer.

Optionally, with reference to any one of the first aspect to the fourth aspect, the joint source and channel coding parameter of the source layer corresponding to the first user includes at least one of the following: a joint source and channel coding parameter of one source layer corresponding to the first user and a joint source and channel coding parameter shared by all the source layers of the first user. It can be learned that a user that uses joint source and channel coding can better read data at a source layer by learning of a joint source and channel coding parameter required by the user.

Optionally, with reference to any one of the first aspect to the fourth aspect, the resource unit allocation subfield indicates a total frequency domain resource, at all source layers, of the user corresponding to each user field. It can be learned that this indicates that the total frequency domain resource at all the source layers may be allocated to the user corresponding to each user field.

Optionally, with reference to any one of the first aspect to the fourth aspect, the second signal field of the first user further includes a layer resource unit assignment field, and the layer resource unit assignment field indicates at least one of the following: the number of all the source layers of the first user and a layer frequency domain resource of the first user at each source layer. It can be learned that the user that uses joint source and channel coding may learn of, based on the layer resource unit assignment field, at least one of the following: the number of all the source layers of the user and the layer frequency domain resource of the user at each source layer.

Optionally, with reference to any one of the first aspect to the fourth aspect, a layer frequency domain resource of the first user at each source layer is a predefined frequency domain resource. It can be learned that because the layer frequency domain resource of the first user at each source layer is the predefined frequency domain resource, no additional indication needs to be performed in the PPDU. This reduces overheads. In addition, the first user may perform decoding based on a fixed frequency domain resource size.

Optionally, with reference to any one of the first aspect to the fourth aspect, the joint source and channel coding parameter of the source layer corresponding to the first user includes at least one of the following: a joint source and channel coding parameter of each source layer corresponding to the first user and the joint source and channel coding parameter shared by all the source layers of the first user. It can be learned that a user that uses joint source and channel coding can better read data at a source layer by learning of a joint source and channel coding parameter required by the user.

Optionally, with reference to any one of the first aspect to the fourth aspect, the second signal field of the first user further includes a signal A field and a signal B field, the signal A field is located on the total frequency domain resource of the first user at all the source layers, and the signal B field is located on a layer frequency domain resource of one source layer corresponding to the first user; and the signal A field indicates the joint source and channel coding parameter shared by all the source layers of the first user, and the signal B field indicates the joint source and channel coding parameter of the one source layer corresponding to the first user. It can be learned that the signal A field is located on the total frequency domain resource of the first user at all the source layers, a parameter indicated by the signal A field is a common parameter corresponding to different source layers, and the signal B field is located on the layer frequency domain resource of the source layer corresponding to the first user, that is, a parameter indicated by the signal B field is a private parameter corresponding to one source layer, so that the first user may separately read and parse a parameter required by each source layer, to reduce complexity of reading the signal field by the first user.

Optionally, with reference to any one of the first aspect to the fourth aspect, the joint source and channel coding parameter of one source layer corresponding to the first user further includes a length of a physical layer service data unit of one source layer corresponding to the first user or a number of symbols carried in a data field corresponding to one source layer of the first user. It can be learned that the first user may further learn of, based on the second signal field, the length of the physical layer service data unit of the source layer or the number of symbols carried in the data field corresponding to the source layer of the first user, so that the first user can better parse data by learning of a mapping relationship between data included in one source layer and data included in all the source layers.

Optionally, with reference to any one of the first aspect to the fourth aspect, the first user carries different source layers on an allocated time domain resource and/or frequency domain resource. It can be learned that because the first user carries different source layers on the allocated time domain resource and/or frequency domain resource, time frequency resources can be better used for data transmission.

Optionally, with reference to any one of the first aspect to the fourth aspect, the PPDU further includes a universal signal field, the first signal field further includes a universal signal overflow field, and the universal signal field and/or the universal signal overflow field indicate/indicates that the PPDU is a PPDU for joint source and channel transmission. It can be learned that the universal signal field and/or the universal signal overflow field indicate/indicates that the PPDU is the PPDU for joint source and channel transmission, so that the user can learn of a function of the PPDU.

According to a fifth aspect, a communication method is provided. The method includes: generating a PPDU, where the PPDU includes a universal signal field and a third signal field, the third signal field includes a universal signal overflow field, the universal signal field and/or the universal signal overflow field indicate/indicates that the PPDU is a PPDU for single-user joint source and channel transmission, the third signal field further includes a resource unit allocation subfield, a layer block field, and one user field corresponding to a user, the resource unit allocation subfield indicates a layer frequency domain resource, at each source layer, of the user corresponding to the user field, and the layer block field indicates a joint source and channel coding parameter of each source layer of the user corresponding to the user field; and sending the PPDU. It can be learned that a single user that uses joint source and channel transmission may learn of a function of the PPDU based on the universal signal field and/or the universal signal overflow field, and further, after learning of the joint source and channel coding parameter of each source layer based on the layer block field, read data on a layer frequency domain resource at each source layer, so that the single user that uses joint source and channel transmission can obtain data at different source layers. In addition, the user may further separately read and parse a parameter required by each source layer. This reduces complexity of reading a signal field by the user. Moreover, because the PPDU includes only one user field, overheads are reduced.

According to a sixth aspect, a communication method is provided. The method includes: receiving a PPDU, where the PPDU includes a universal signal field and a third signal field, the third signal field includes a universal signal overflow field, the universal signal field and/or the universal signal overflow field indicate/indicates that the PPDU is a PPDU for single-user joint source and channel transmission, the third signal field further includes a resource unit allocation subfield, a layer block field, and a user field corresponding to the user, the resource unit allocation subfield indicates a layer frequency domain resource, at each source layer, of the user corresponding to the user field, and the layer block field indicates a joint source and channel coding parameter of each source layer of the user corresponding to the user field; and performing joint source and channel decoding based on the joint source and channel coding parameter of each source layer of the user corresponding to the user field. It can be learned that a single user that uses joint source and channel transmission may learn of a function of the PPDU based on the universal signal field and/or the universal signal overflow field, and further, after learning of the joint source and channel coding parameter of each source layer based on the layer block field, read data on a layer frequency domain resource at each source layer, so that the single user that uses joint source and channel transmission can obtain data at different source layers. In addition, the user may further separately read and parse a parameter required by each source layer. This reduces complexity of reading a signal field by the user. Moreover, because the PPDU includes only one user field, overheads are reduced.

According to a seventh aspect, a communication apparatus is provided. The apparatus includes a processing module and a transceiver module. The processing module is configured to generate a PPDU, where the PPDU includes a universal signal field and a third signal field, the third signal field includes a universal signal overflow field, and the universal signal field and/or the universal signal overflow field indicate/indicates that the PPDU is a PPDU for single-user joint source and channel transmission. The third signal field further includes a resource unit allocation subfield, a layer block field, and a user field corresponding to a user, where the resource unit allocation subfield indicates a layer frequency domain resource, at each source layer, of the user corresponding to the user field, and the layer block field indicates a joint source and channel coding parameter of each source layer of the user corresponding to the user field. The transceiver module is configured to send the PPDU.

According to an eighth aspect, a communication apparatus is provided. The apparatus includes a processing module and a transceiver module. The transceiver module is configured to receive a PPDU, where the PPDU includes a universal signal field and a third signal field, the third signal field includes a universal signal overflow field, and the universal signal field and/or the universal signal overflow field indicate/indicates that the PPDU is a PPDU for single-user joint source and channel transmission. The third signal field further includes a resource unit allocation subfield, a layer block field, and a user field corresponding to the user, where the resource unit allocation subfield indicates a layer frequency domain resource, at each source layer, of the user corresponding to the user field, and the layer block field indicates a j oint source and channel coding parameter of each source layer of the user corresponding to the user field. The processing module is configured to perform joint source and channel decoding based on the joint source and channel coding parameter of each source layer of the user corresponding to the user field.

Optionally, with reference to any one of the fifth aspect to the eighth aspect, the third signal field further includes a joint source and channel signal field, and the joint source and channel signal field indicates a joint source and channel coding parameter shared by all source layers of the user corresponding to the user field. It can be learned that a single user that uses joint source and channel transmission may learn of the joint source and channel coding parameter shared by all the source layers based on the joint source and channel signal field, so that the user does not need to obtain the joint source and channel coding parameter shared by all the source layers each time the user parses data at a source layer. In addition, because the joint source and channel coding parameter shared by all the source layers is included in one signal field, overheads are reduced.

According to a ninth aspect, a chip is provided. The chip includes at least one logic circuit and an input/output interface, the logic circuit is configured to read and execute stored instructions, and when the instructions are run, the chip is enabled to perform the method according to any one of the first aspect, the second aspect, the fifth aspect, or the sixth aspect.

According to a tenth aspect, a computer-readable storage medium is provided. The computer-readable storage medium stores a computer program, the computer program includes program instructions, and when the program instructions are executed by a computer, the computer is enabled to perform the method according to any one of the first aspect, the second aspect, the fifth aspect, or the sixth aspect.

According to an eleventh aspect, a communication apparatus is provided, including a processor and a transceiver. The processor is configured to support the communication apparatus in performing a corresponding function in the method in the first aspect, the second aspect, the fifth aspect, or the sixth aspect. The transceiver is configured to support communication between the communication apparatus and another communication apparatus other than the communication apparatus. The communication apparatus may further include a memory, the memory is configured to be coupled to the processor, and the memory stores program instructions and data that are necessary for the communication apparatus. The transceiver may be integrated into the communication apparatus or independent of the communication apparatus. This is not limited herein.

According to a twelfth aspect, a computer program product including instructions is provided. When the computer program product runs on a computer, the computer is enabled to perform the method according to any one of the first aspect, the second aspect, the fifth aspect, or the sixth aspect.

According to a thirteenth aspect, a communication system is provided, including one or more of the following: a first device that performs the method according to any one of the first aspect or the fifth aspect and a second device that performs the method according to any one of the second aspect or the sixth aspect.

### BRIEF DESCRIPTION OF DRAWINGS

The following briefly describes accompanying drawings used for describing embodiments.
FIG. 1 is a procedure of a conventional data transmission solution;
FIG. 2A and FIG. 2B are a schematic flowchart of a joint source and channel coding data transmission solution;
FIG. 3 is a diagram of a network architecture of a WLAN according to an embodiment of this application;
FIG. 4 is a diagram of a hardware structure applicable to a communication apparatus according to an embodiment of this application;
FIG. 5 is a schematic flowchart of a communication method according to an embodiment of this application;
FIG. 6 is a schematic flowchart of still another communication method according to an embodiment of this application;
FIG. 7 is a frame structure of a PPDU corresponding to a case in which a resource unit allocation subfield indicates a layer frequency domain resource according to an embodiment of this application;
FIG. 8 is still another frame structure of a PPDU corresponding to a case in which a resource unit allocation subfield indicates a layer frequency domain resource according to an embodiment of this application;
FIG. 9 is a frame structure of a PPDU corresponding to a case in which a resource unit allocation subfield indicates a total frequency domain resource according to an embodiment of this application;
FIG. 10 is still another frame structure of a PPDU corresponding to a case in which a resource unit allocation subfield indicates a total frequency domain resource according to an embodiment of this application;
FIG. 11 is still another frame structure of a PPDU corresponding to a case in which a resource unit allocation subfield indicates a total frequency domain resource according to an embodiment of this application;
FIG. 12 is still another frame structure of a PPDU corresponding to a case in which a resource unit allocation subfield indicates a total frequency domain resource according to an embodiment of this application;
FIG. 13 is still another frame structure of a PPDU corresponding to a case in which a resource unit allocation subfield indicates a total frequency domain resource according to an embodiment of this application;
FIG. 14A and FIG. 14B are a frame structure of a PPDU corresponding to a case in which different source layers are carried on a time frequency resource according to an embodiment of this application;
FIG. 15 is a frame structure of a PPDU in a single-user transmission scenario according to an embodiment of this application; and
FIG. 16 is a diagram of a structure of a communication apparatus according to an embodiment of this application.

### DESCRIPTION OF EMBODIMENTS

The following describes technical solutions in embodiments of this application with reference to accompanying drawings in embodiments of this application. Terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may represent a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same network elements or purposes. A person skilled in the art may understand that the terms such as "first" and "second" do not limit a number or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, or improvement made based on technical solutions of this application shall fall within the protection scope of this application.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The following describes some terms used in this application. It may be understood that when the following terms are used in other parts of this application, no explanation or description is provided subsequently.

### 1. Joint source and channel coding (joint source and channel coding, JSCC) solution

As information technologies develop and the society progresses, people have increasingly more requirements for information, and people propose higher requirements for enjoying integrated services such as voice, data, a picture, and a video and different types of multimedia services anytime and anywhere. Therefore, multimedia communication has become a focus of people's attention. The video is an important part of multimedia data, has a series of advantages, such as exact, real-time, intuitive, specific, and vivid, brings visual experience to users, and greatly enriches conventional services. In the next few years, wireless video services will have a broader development prospect. Therefore, coding and transmission technologies of a wireless video also become a current research hotspot in the field of multimedia communication.

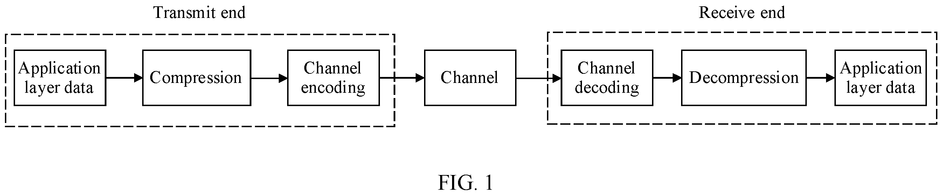

FIG. 1 is a procedure of a conventional data transmission solution. As shown in FIG. 1, after steps of compression and channel encoding are performed on application layer data of a transmit end, for example, data such as a video and a picture, the application layer data is transmitted to a receive end over a channel. The receive end performs processes of channel decoding and data decompression on the received data, and obtains the application layer data transmitted by the receive end.

Due to a limited bandwidth of a wireless channel, video data needs to be efficiently compressed. However, technologies such as predictive coding and variable-length coding used in video coding make a bitstream extremely sensitive to a channel bit error while efficiently compressing the bitstream, and it is well known that the wireless channel is interfered by various types of noise and has a high bit error rate. Therefore, how to transmit a high-quality video on a wireless mobile network is a serious challenge. Coding is one of critical issues. Coding is mainly classified into source coding and channel coding. A main indicator of source coding is coding efficiency, and a main objective of channel coding is to improve reliability of information transmission. A digital video communication system based on separate source and channel coding needs not only a physical layer adaptive algorithm, but also a video bit rate control module. When a video bit rate does not match a channel capacity, cliff effect similar to that in a physical layer occurs. That is, if channel noise is greater than a predicted value, a reconstructed video is severely distorted; or if channel noise is less than a predicted value, distortion is not reduced.

Therefore, wireless video transmission needs to seamlessly adapt to a channel condition, that is, the transmit end does not need to change a transmission method based on the channel condition, and video quality at the receive end corresponds to a real-time channel condition.

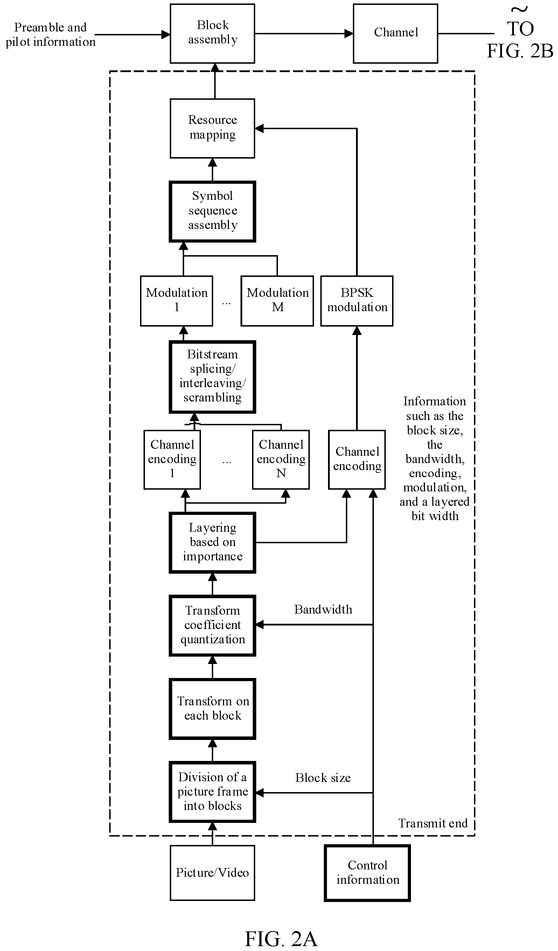

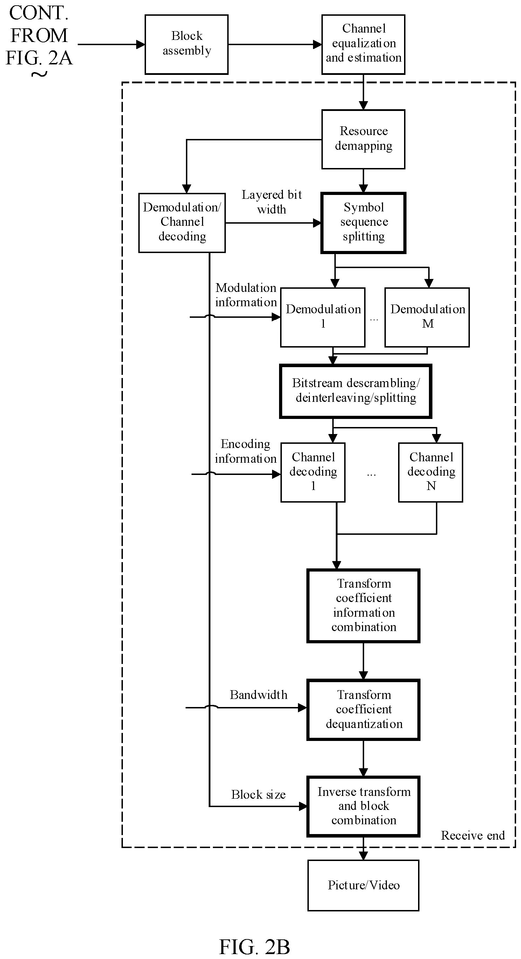

To resolve the foregoing problems, a joint source and channel coding and decoding solution for an adaptive channel is proposed. As shown in FIG. 2A and FIG. 2B, a transmit end device divides, into blocks, a picture frame in a picture or a video, and performs a discrete cosine transform (discrete cosine transform, DCT) on the blocks. Because most energy of a graph is concentrated in a low frequency part obtained after the DCT transform, the picture frame can be compressed through the DCT transform. Then, picture data obtained after the DCT transform is quantized, and is layered based on importance of the data. Rateless coding, for example, channel encoding 1 to channel encoding N shown in FIG. 2A and FIG. 2B, is separately performed on the layered picture data in different bit planes. Encoded data is mapped to a resource block through bit splicing and symbol modulation. Control information includes information such as a block size, a bandwidth, encoding, modulation, and a layered bit width in the foregoing processes. After channel modulation and encoding are separately performed on the control information, the control information is also mapped to a corresponding resource block and sent together with data information.

At a receive end, after performing synchronization, channel estimation, and equalization processing on a received signal, a receive end device obtains the control information and the data information through resource demapping. Subsequently, the receive end device performs, based on the control information, symbol splitting and demodulation on the data information to obtain soft information, and then performs channel decoding by using a belief propagation transmission method to obtain a 0/1 bit probability. Finally, information is combined based on the probability to restore original source information. According to the joint source and channel coding solution shown in FIG. 2A and FIG. 2B, quality of wireless video or picture transmission can be improved.

### 2. Joint source and channel transmission

Joint source and channel transmission may be referred to as layered transmission, user multi-physical layer service data unit (physical layer service data unit, PSDU) transmission, or the like. This is not limited herein. In a possible implementation, data may be divided into one base layer and at least one enhancement layer through joint source and channel transmission.

### 3. Source layer

One source layer is one PSDU. A user that uses joint source and channel coding corresponds to a plurality of source layers, that is, the user that uses joint source and channel coding corresponds to a plurality of PSDUs. A user that does not use joint source and channel coding corresponds to one source layer, that is, the user that uses joint source and channel coding corresponds to one PSDU.

### 4. Layer frequency domain resource

A layer frequency domain resource is a frequency domain resource of a source layer. In other words, the layer frequency domain resource is a frequency domain resource allocated to the source layer. The frequency domain resource may be a resource unit (resource unit, RU) or a multi-resource unit (multi-RU, MRU).

### 5. Joint source and channel coding parameter

A joint source and channel coding parameter may be classified into a joint source and channel coding parameter of one source layer and a joint source and channel coding parameter shared by all source layers.

The joint source and channel coding parameter of one source layer may include at least one of the following: a modulation and coding scheme of the source layer, probability of source distribution of the source layer, and a length of a physical layer service data unit of the source layer. The probability of source distribution is a probability of a binary number 0 or a probability of a binary number 1. The length of the physical layer service data unit of the source layer may also be referred to as a number of symbols carried in a data field corresponding to the source layer. The modulation and coding scheme of the source layer is a modulation scheme of the physical layer service data unit of the source layer, and the modulation scheme includes BPSK/QPSK/8-PSK/16QAM/64QAM/256QAM and the like. The length of the physical layer service data unit of the source layer may indicate a mapping relationship between the physical layer service data unit and different bit planes, and one physical layer service data unit may correspond to one bit plane, or one physical layer service data unit may correspond to a plurality of bit planes.

The joint source and channel coding parameter shared by all the source layers may include at least one of the following: a frame rate (frame rate), a color coding method (RGB/YUV), a picture size (picture size) (resolution), a pixel depth (pixel depth), a quantization step, a DCT transform or discrete wavelet transform (discrete wavelet transformation, DWT) size (DCT/DWT size), a number of DCT blocks included in each code block, a number of DCT coefficient quantization bit planes, and a number of code blocks. The frame rate is a frame playback rate (frame/second), and a supported typical value of the frame rate is 60/90/120. The picture size is a size of a picture, including a height (width) and a width (height), and a supported typical value of the picture size is 1080P(1920*1080)/4K(3840*2160)/2048*1024/4096*2048. The pixel depth is a color depth of each pixel, and a typical value of the pixel depth is 8 bits/10 bits. The quantization step is a quantization order. The DCT transform or discrete wavelet transform size is a size of a DCT/DWT transform, and a typical value of the DCT transform or discrete wavelet transform size is 4*4/8*8/16*16/32*32. The number of DCT blocks included in each code block is a number of DCT blocks included in a JSCC code block carried in each data field, and a typical value of the number of DCT blocks included in each code block is 10/15/20/25. The number of DCT coefficient quantization bit planes is a number of bit planes formed by sequentially arranging each quantized DCT coefficient from a most significant bit to a least significant bit, and a typical value of the number of DCT coefficient quantization bit planes is 8/10/12. The number of code blocks is a number of picture code blocks carried in each data field.

The foregoing content briefly describes meanings of nouns (communication terms) used in embodiments of this application for better understanding of the technical solutions provided in embodiments of this application, and does not constitute a limitation on the technical solutions provided in embodiments of this application.

It should be understood that embodiments of this application may be applied to a wireless local area network (wireless local area network, WLAN) scenario, and may be applied to an IEEE 802.11 system standard, for example, 802.11ax, 802.11be, or a next-generation standard. Alternatively, embodiments of this application may be applied to a wireless local area network system, for example, an internet of things (internet of things, IoT) network or a vehicle-to-everything (Vehicle to X, V2X) network. Certainly, embodiments of this application may be further applied to another possible communication system, for example, an LTE system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, and a future 6G communication system.

The following uses an example in which embodiments of this application are applicable to a WLAN scenario. It should be understood that the WLAN develops from the 802.11a/g standard, and has gone through 802.11n, 802.11ac, 802.11ax, and 802.11be that is currently being discussed. 802.11n may also be referred to as high throughput (high throughput, HT), 802.11ac may also be referred to as very high throughput (very high throughput, VHT), 802.11ax may also be referred to as high efficient (high efficient, HE) or Wi-Fi 6, and 802.11be may also be referred to as extremely high throughput (extremely high throughput, EHT) or Wi-Fi 7. Standards before HT, such as 802.11a/b/g, are collectively referred to as non-high throughput (Non-HT).

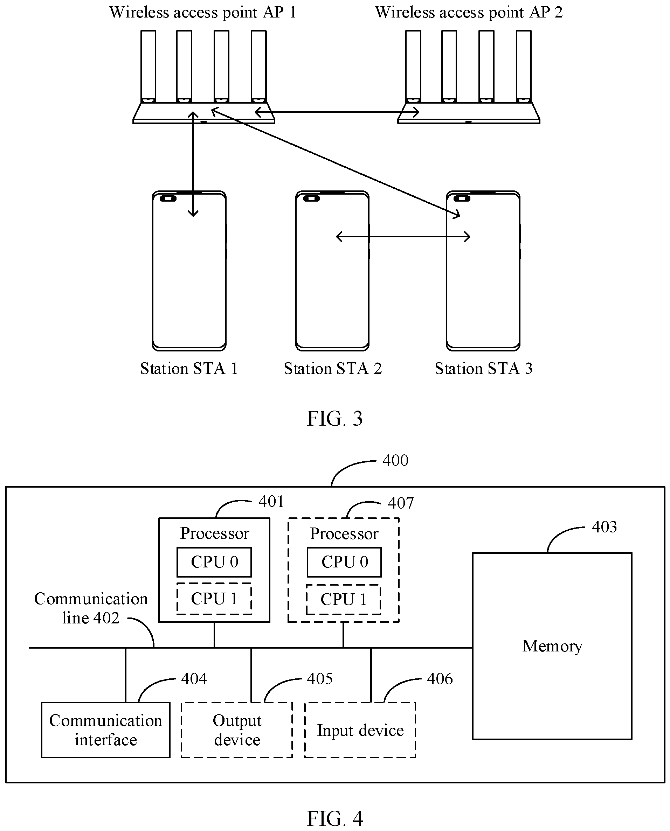

FIG. 3 is a diagram of a network architecture of a WLAN according to an embodiment of this application. In FIG. 3, an example in which the WLAN includes one wireless access point (access point, AP) and two stations (station, STA) is used. A STA associated with an AP can receive a radio frame sent by the AP, and can also send a radio frame to the AP. In addition, embodiments of this application are also applicable to communication between APs, for example, the APs may communicate with each other by using a distributed system (distributed system, DS), and embodiments of this application are also applicable to communication between STAs. It should be understood that a number of APs and a number STAs in FIG. 3 are merely examples, and there may be more or fewer APs and STAs.

The access point may be an access point through which a terminal device (for example, a mobile phone) accesses a wired (or wireless) network, is mainly deployed in a home, a building, and a campus, and has a typical coverage radius ranging from dozens of meters to hundreds of meters. Certainly, the access point may be alternatively deployed outdoors. The access point is equivalent to a bridge that connects a wired network and a wireless network, and a main function of the access point is to connect various wireless network clients together and then connect the wireless network to the Ethernet. Specifically, the access point may be a terminal device (for example, a mobile phone) or a network device (for example, a router) with a Wi-Fi chip. The access point may be a device that supports the 802.11be standard. Alternatively, the access point may be a device that supports a plurality of wireless local area network (wireless local area networks, WLAN) standards of the 802.11 family such as 802.11ax, 802.11ac, 802.11n, 802.11g, 802.11b, 802.11a, and 802.11be next-generation. The access point in this application may be a high efficient (high efficient, HE) AP, an extremely high throughput (extremely high throughput, EHT) AP, or an access point applicable to a future generation Wi-Fi standard.

The STA in embodiments of this application may be a user terminal, a user apparatus, an access apparatus, a subscriber station, a subscriber unit, a mobile station, a user agent, a user device, or another device that has a wireless communication function. The user terminal may include various devices having a wireless communication function, for example, a handheld device, a vehicle-mounted device, a wearable device, a computing device, another processing device connected to a wireless modem, user equipment (user equipment, UE) in various forms, a mobile station (mobile station, MS), a terminal (terminal), terminal equipment (terminal equipment), a portable communication device, a handheld device, a portable computing device, an entertainment device, a game device or system, a global positioning system device, or any other suitable device configured to perform network communication via a wireless medium. For example, the STA may be a router, a switch, a bridge, or the like. Herein, for ease of description, the devices mentioned above are collectively referred to as a station or a STA.

The AP and the STA in embodiments of this application may be an AP and a STA that are applicable to the IEEE 802.11 system standard. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device such as a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product that supports media access control (media access control, MAC) and a physical layer (physical, PHY) in the 802.11 system standard, for example, a mobile phone or a notebook computer.

A communication method provided in this application may be applied to a wireless communication system. The wireless communication system may be a wireless local area network (Wireless local area network) or a cellular network. The method may be implemented by a communication device in the wireless communication system or a chip or a processor in the communication device. The communication device may be a wireless communication device that supports multi-link concurrent transmission. For example, the communication device is referred to as a multi-link device (Multi-link device) or a multi-band device (multi-band device). Compared with a device that supports only single-link transmission, the multi-link device has higher transmission efficiency and a higher throughput. The multi-link device includes one or more affiliated stations STAs (affiliated STAs). The affiliated STA is a logical station and may work over one link. The affiliated station may be an access point (Access Point, AP) or a non-access point station (non-Access Point Station, non-AP STA). For ease of description, in this application, a multi-link device whose affiliated station is an AP may be referred to as a multi-link AP, a multi-link AP device, or an AP multi-link device (AP multi-link device), and a multi-link device whose affiliated station is a non-AP STA may be referred to as a multi-link STA, a multi-link STA device, or a STA multi-link device (STA multi-link device).

In addition, the technical solutions provided in embodiments of this application are applicable to a plurality of system architectures. A network architecture and a service scenario described in embodiments of this application are intended to describe the technical solutions in embodiments of this application more clearly, and do not constitute a limitation on the technical solutions provided in embodiments of this application. A person of ordinary skill in the art may be aware that, with evolution of the network architecture and emergence of new service scenarios, the technical solutions provided in embodiments of this application are also applicable to similar technical problems.

Optionally, the wireless access points, the stations, and the like in FIG. 3 may be implemented by one device, or may be jointly implemented by a plurality of devices, or may be one functional module in one device. This is not specifically limited in embodiments of this application. It may be understood that the foregoing function may be a network element in a hardware device, a software function running on dedicated hardware, or a virtualization function instantiated on a platform (for example, a cloud platform).

For example, devices in FIG. 3 may be implemented by using a communication apparatus 400 in FIG. 4. FIG. 4 is a diagram of a hardware structure applicable to a communication apparatus according to an embodiment of this application. The communication apparatus 400 includes at least one processor 401, a communication line 402, a memory 403, and at least one communication interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path for transmitting information between the foregoing components.

The communication interface 404 is any apparatus of a transceiver type (such as an antenna), and is configured to communicate with another device or communication network, such as the Ethernet, a RAN, or a wireless local area network (wireless local area network, WLAN).

The memory 403 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer, but is not limited thereto. The memory may exist independently, and is connected to the processor through the communication line 402. The memory may alternatively be integrated with the processor. The memory provided in embodiments of this application may be usually non-volatile. The memory 403 is configured to store computer-executable instructions for performing the solutions of this application, and the processor 401 controls execution of the computer-executable instructions. The processor 401 is configured to execute the computer-executable instructions stored in the memory 403, to implement methods provided in the following embodiments of this application.

Optionally, the computer-executable instructions in embodiments of this application may also be referred to as application program code. This is not specifically limited in embodiments of this application.

In a possible implementation, the processor 401 may include one or more CPUs, such as a CPU 0 and a CPU 1 in FIG. 4.

In a possible implementation, the communication apparatus 400 may include a plurality of processors, such as the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive input of a user in a plurality of manners. For example, the input device 406 may be a mouse, a keyboard, a touchscreen device, or a sensor device.

The foregoing communication apparatus 400 may be a general-purpose device or a dedicated device. During specific implementation, the communication apparatus 400 may be a portable computer, a network server, a palmtop computer (personal digital assistant, PDA), a mobile phone, a tablet computer, a wireless terminal device, an embedded device, or a device having a structure similar to that in FIG. 4. A type of the communication apparatus 400 is not limited in embodiments of this application.

After the communication apparatus is powered on, the processor 401 may read a software program in the memory 403, interpret and execute instructions of the software program, and process data of the software program. When data needs to be sent in a wireless manner, the processor 401 performs baseband processing on the to-be-sent data, and then outputs a baseband signal to a radio frequency circuit, and the radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 401; and the processor 401 converts the baseband signal into data, and processes the data.

In another implementation, the radio frequency circuit and the antenna may be disposed independently of the processor for baseband processing. For example, in a distributed scenario, the radio frequency circuit and the antenna may be disposed remotely independent of the communication apparatus.

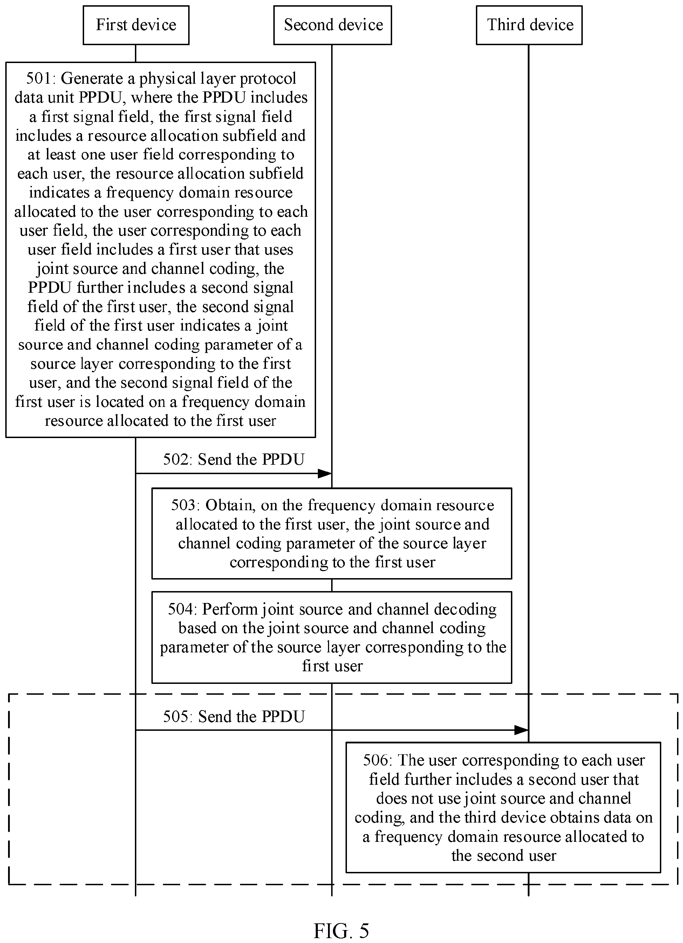

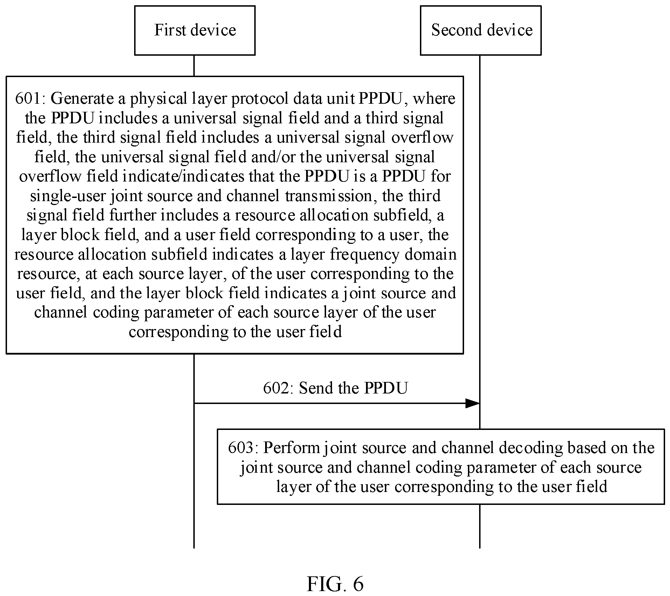

The following describes the technical solutions provided in embodiments of this application with reference to the accompanying drawings. It may be understood that a first device may be an AP or a STA in FIG. 3, a second device may be an AP or a STA in FIG. 3, and a third device may be an AP or a STA in FIG. 3. This is not limited herein. The following describes the technical solutions provided in embodiments of this application by using an example in which the first device is an AP, and the second device and the third device are STAs. In FIG. 5, a second device is a device corresponding to a first user that uses joint source and channel coding, and a third device is a device corresponding to a second user that does not use joint source and channel coding. In FIG. 6, a second device is a device corresponding to one user field.

FIG. 5 is a schematic flowchart of a communication method according to an embodiment of this application. It should be understood that the embodiment in FIG. 5 is for multi-user transmission. As shown in FIG. 5, the method includes but is not limited to the following steps.

501: A first device generates a PPDU, where the PPDU includes a first signal field, the first signal field includes a resource unit allocation subfield and at least one user field corresponding to each user, the resource unit allocation subfield indicates a frequency domain resource allocated to the user corresponding to each user field, the user corresponding to each user field includes the first user that uses joint source and channel coding, the PPDU further includes a second signal field of the first user, the second signal field of the first user indicates a joint source and channel coding parameter of a source layer corresponding to the first user, and the second signal field of the first user is located on a frequency domain resource allocated to the first user.

Optionally, that the first signal field includes at least one user field corresponding to each user may be understood as follows: The first signal field includes at least one user field corresponding to the first user that uses joint source and channel coding and one user field corresponding to the second user that does not use joint source and channel coding. There may be one or more first users, and there may also be one or more second users. This is not limited herein. It should be understood that one first user may correspond to at least one user field, and one second user corresponds to one user field.

To enable a user to learn whether to use joint source and channel coding transmission, the solution may also be implemented in any one of the following manners.

Manner 1.1: The first signal field further includes indication information indicating that the first user uses joint source and channel coding transmission.

Manner 1.2: A plurality of user fields corresponding to the first user indicate that the first user uses joint source and channel coding transmission.

Manner 1.1 may be understood as follows: The indication information indicating that the first user uses joint source and channel coding is in a user field corresponding to the first user. For details, refer to any one of the following manners.

Manner 2.1: The first user corresponds to one user field, and the indication information indicating that the first user uses joint source and channel coding transmission may be in the user field corresponding to the first user. That is, the user field corresponding to the first user may further include a modulation and coding scheme field, and the modulation and coding scheme field indicates that the first user uses joint source and channel coding transmission. For example, a number of bits of the modulation and coding scheme field is 5, that is, a value of the modulation and coding scheme field may range from 0 to 31. When the value of the modulation and coding scheme field ranges from 0 to 15, it indicates different modulation and coding schemes of the first user; and when the value of the modulation and coding scheme field is any value from 16 to 31, it indicates that the first user uses joint source and channel coding transmission. It should be understood that, in this application, specific values indicating that the first user uses joint source and channel coding transmission and specific values indicating different modulation and coding schemes of the first user are not limited herein.

Manner 2.2: The first user corresponds to one user field, and the indication information indicating that the first user uses joint source and channel coding transmission may be in the user field corresponding to the first user. That is, the user field corresponding to the first user may further include a joint source and channel coding indication field, and the joint source and channel coding indication field indicates that the first user uses joint source and channel coding transmission. Alternatively, that the first user uses joint source and channel coding transmission may be indicated by a reserved field, and when the reserved field indicates that the first user uses joint source and channel coding transmission, a name of the reserved field may be changed, and a specific name is not limited. Optionally, the user field corresponding to the first user may further include a modulation and coding scheme field, and the modulation and coding scheme field indicates a modulation and coding scheme of a base layer corresponding to the first user. For example, a number of bits of the modulation and coding scheme field is 5, and when a value of the modulation and coding scheme field is any value from 16 to 31, it indicates the modulation and coding scheme of the base layer corresponding to the first user. Alternatively, the value of the modulation and coding scheme field is any value, the value does not represent any meaning, and a STA may ignore the modulation and coding scheme field.

Manner 2.3: The first user corresponds to a plurality of user fields, and the indication information indicating that the first user uses joint source and channel coding transmission may be located in one or more of the plurality of user fields corresponding to the first user. That is, each of the one or more user fields includes a modulation and coding scheme field, and the modulation and coding scheme field indicates that the first user uses joint source and channel coding transmission. For example, a number of bits of the modulation and coding scheme field is 5, that is, a value of the modulation and coding scheme field may range from 0 to 31. When the value of the modulation and coding scheme field ranges from 0 to 15, it indicates different modulation and coding schemes of the first user; and when the value of the modulation and coding scheme field is any value from 16 to 31, it indicates that the first user uses joint source and channel coding transmission.

Manner 2.4: The first user corresponds to a plurality of user fields, and the indication information indicating that the first user uses joint source and channel coding transmission may be located in one or more of the plurality of user fields corresponding to the first user. That is, each of the one or more user fields may further include a joint source and channel coding indication field, and the j oint source and channel coding indication field indicates that the first user uses joint source and channel coding transmission. Alternatively, that the first user uses joint source and channel coding transmission may be indicated by a reserved field, and when the reserved field indicates that the first user uses joint source and channel coding transmission, a name of the reserved field may be changed, and a specific name is not limited. Optionally, each of the plurality of user fields corresponding to the first user may further include a modulation and coding scheme field, and the modulation and coding scheme field indicates a modulation and coding scheme of a base layer corresponding to the first user. For example, a number of bits of the modulation and coding scheme field is 5, and when a value of the modulation and coding scheme field is any value from 16 to 31, it indicates the modulation and coding scheme of the base layer corresponding to the first user. Alternatively, the value of the modulation and coding scheme field is any value, the value does not represent any meaning, and a STA may ignore the modulation and coding scheme field.

Optionally, one user field corresponding to one second user may also include a modulation and coding scheme field. For Manner 2.1 or Manner 2.3, in a possible implementation, the modulation and coding scheme field in the user field corresponding to the second user indicates that the second user does not use joint source and channel coding transmission, that is, the modulation and coding scheme field explicitly indicates that the second user does not use joint source and channel coding transmission. For example, when a value of the modulation and coding scheme field is any value from 0 to 15, it indicates a modulation and coding scheme used by the second user, and also indicates that the second user does not use joint source and channel coding transmission. In another possible implementation, the modulation and coding scheme field indicates a modulation and coding scheme used by the second user, that is, the modulation and coding scheme field implicitly indicates that the second user does not use j oint source and channel coding transmission. For example, when a value of the modulation and coding scheme field is any value from 0 to 15, it indicates the modulation and coding scheme used by the second user.

Optionally, one user field corresponding to one second user may also include a joint source and channel coding indication field. For Manner 2.2 or Manner 2.4, the joint source and channel coding indication field in the user field corresponding to the second user indicates a modulation and coding scheme used by the second user, and also indicates that the second user does not use joint source and channel coding transmission.

Manner 1.2 may be understood as: Whether joint source and channel coding transmission is used is indicated by using a number of user fields. In a possible implementation, one of the plurality of user fields corresponding to the first user may further include a modulation and coding scheme field corresponding to one source layer, and the modulation and coding scheme field indicates a modulation and coding scheme of the source layer. For example, a number of bits of the modulation and coding scheme field is 5, that is, a value of the modulation and coding scheme field may range from 0 to 31. When the value of the modulation and coding scheme field is any value from 0 to 15, it indicates the modulation and coding scheme of the source layer. Certainly, one user field corresponding to one second user indicates that the second user does not use joint source and channel coding transmission. In a possible implementation, the user field corresponding to the second user may further include a modulation and coding scheme field corresponding to one source layer, and the modulation and coding scheme field indicates a modulation and coding scheme of the source layer. For example, a number of bits of the modulation and coding scheme field is 5, that is, a value of the modulation and coding scheme field may range from 0 to 31. When the value of the modulation and coding scheme field is any value from 0 to 15, it indicates the modulation and coding scheme of the source layer.

That the resource unit allocation subfield indicates the frequency domain resource allocated to the user corresponding to each user field may be understood in any one of the following manners. This is not limited herein.

Manner 3.1: The resource unit allocation subfield indicates a layer frequency domain resource, at each source layer, of the user corresponding to each user field. That is, the resource unit allocation subfield indicates a layer frequency domain resource of the first user at each source layer and a layer frequency domain resource of the second user at one source layer. It can be learned that this indicates that a layer frequency domain resource at a single source layer may be allocated to the user corresponding to each user field. Therefore, layer frequency domain resources at different source layers are different, and reading, by the user, a field on a layer frequency domain resource of a source layer does not affect reading, by the user, a field on a layer frequency domain resource of another source layer.

Manner 3.2: The resource unit allocation subfield indicates a total frequency domain resource, at all source layers, of the user corresponding to each user field. That is, the resource unit allocation subfield indicates a total frequency domain resource of the first user at all the source layers and a total frequency domain resource of the second user at all the source layers. It can be learned that this indicates that the total frequency domain resource at all the source layers may be allocated to the user corresponding to each user field.

It should be noted that the second user that does not use joint source and channel coding corresponds to one source layer. Therefore, sizes of the frequency domain resources in Manner 3.1 and Manner 3.2 are the same.

Manner 3.1 may be implemented in a case in which the first user that uses joint source and channel coding corresponds to a plurality of user fields, and the second user that does not use joint source and channel coding corresponds to one user field. To be specific, for the first user that uses joint source and channel coding, when the first device performs resource allocation, the first device may consider different source layers as data corresponding to different user fields, that is, allocate a corresponding RU or MRU to data at each source layer; and for the second user that does not use joint source and channel coding, when the first device performs resource allocation, the first device may consider one source layer as data corresponding to one user field, and allocate a corresponding RU or MRU to data at one source layer.

Optionally, when the resource unit allocation subfield indicates the layer frequency domain resource, at each source layer, of the user corresponding to each user field, user fields corresponding to different source layers of the first user use a same station identifier field. That is, all station identifier fields included in the user fields corresponding to different source layers indicate the first user.

When the resource unit allocation subfield indicates the layer frequency domain resource, at each source layer, of the user corresponding to each user field, a number of source layers corresponding to the first user may be implicitly indicated or explicitly indicated. This is not limited herein. In a possible implementation, implicitly indicating the number of source layers corresponding to the first user may be understood as follows: The number of source layers of the first user is equal to a number of user fields that use the same station identifier field, and the station identifier field indicates the first user. In a possible implementation, explicitly indicating the number of source layers corresponding to the first user may be understood as follows: The second signal field of the first user further indicates at least one of the following: a number of all source layers of the first user and an identifier of one source layer corresponding to the first user, that is, one second signal field of the first user further indicates at least one of the following: the number of all the source layers of the first user and the identifier of one source layer corresponding to the first user. For example, the second signal field of the first user includes a number of layers field, and the number of layers field indicates the number of all the source layers of the first user. For another example, the second signal field of the first user includes a layer identifier field, and the layer identifier field indicates the identifier of one source layer corresponding to the first user. Alternatively, a user field corresponding to the first user further indicates the number of all the source layers of the first user. For example, the user field corresponding to the first user includes a number of layers field, and the number of layers field indicates the number of all the source layers of the first user.

In addition, when the resource unit allocation subfield indicates the layer frequency domain resource, at each source layer, of the user corresponding to each user field, a number of second signal fields of the first user, the number of source layers corresponding to the first user, and a number of user fields corresponding to the first user are all the same. That is, one source layer corresponds to one second signal field of the first user. In other words, the PPDU includes a plurality of second signal fields of the first user. One second signal field of the first user further indicates at least one of the following: the number of all the source layers of the first user and the identifier of one source layer corresponding to the first user. This is equivalent to that identifiers of all the source layers of the first user may be indicated by the plurality of second signal fields of the first user.

When the PPDU includes the plurality of second signal fields of the first user, the joint source and channel coding parameter of the source layer corresponding to the first user includes at least one of the following: a joint source and channel coding parameter of one source layer corresponding to the first user and a joint source and channel coding parameter shared by all the source layers of the first user. The joint source and channel coding parameter of one source layer corresponding to the first user includes at least one of the following: a modulation and coding scheme of one source layer corresponding to the first user and probability of source distribution of one source layer corresponding to the first user. The joint source and channel coding parameter shared by all the source layers of the first user may include at least one of the following: a frame rate, a color coding method, a picture size, a pixel depth, a quantization step, a DCT transform or discrete wavelet transform size, a number of DCT blocks included in each code block, a number of DCT coefficient quantization bit planes, and a number of code blocks. In another possible implementation, at least one of the frame rate, the color coding method, the picture size, the pixel depth, the quantization step, the DCT transform or discrete wavelet transform size, the number of DCT blocks included in each code block, the number of DCT coefficient quantization bit planes, and the number of code blocks may be located in a frame header or a frame body of a media access control (media access control, MAC) frame corresponding to the first user. The MAC frame is located in each data field corresponding to the first user. It can be learned that a user that uses joint source and channel coding can better read data at a source layer by learning of a joint source and channel coding parameter required by the user.

Manner 3.2 may be implemented in a case in which the first user that uses joint source and channel coding corresponds to one user field and the second user that does not use joint source and channel coding corresponds to one user field.

Optionally, when the resource unit allocation subfield indicates the total frequency domain resource, at all the source layers, of the user corresponding to each user field, a layer frequency domain resource of the first user at each source layer may be indicated by the second signal field of the first user or predefined in a protocol. Specifically, any one of the following manners may be used for implementation. This is not limited herein.

Manner 4.1: The second signal field of the first user further includes a layer resource unit assignment field, and the layer resource unit assignment field indicates at least one of the following: the number of all the source layers of the first user and the layer frequency domain resource of the first user at each source layer. It can be learned that a user that uses joint source and channel coding may learn of, based on the layer resource unit assignment field, at least one of the following: the number of all the source layers of the user and the layer frequency domain resource of the user at each source layer.

Manner 4.2: The layer frequency domain resource of the first user at each source layer is a predefined frequency domain resource. It can be learned that because the layer frequency domain resource of the first user at each source layer is the predefined frequency domain resource, no additional indication needs to be performed in the PPDU. This reduces overheads. In addition, the first user may perform decoding based on a fixed frequency domain resource size.

For Manner 4.1, in a possible implementation, a value of the layer resource unit assignment field indicates at least one of the following: the number of all the source layers of the first user and the layer frequency domain resource of the first user at each source layer.

For example, in the second row of Table 1, RU 242-RU 242 indicates that the number of all the source layers of the first user is 2, and a size of a layer frequency domain resource of the first user at each of the two source layers is RU 242. That is, when the value of the layer resource unit assignment field is 0, it indicates that the number of all the source layers of the first user is 2, and the size of the layer frequency domain resource of the first user at each of the two source layers is RU 242. In the third row of Table 1, RU 242-RU 242-RU 242 indicates that the number of all the source layers of the first user is 3, and a size of a layer frequency domain resource of the first user at each of the three source layers is RU 242. That is, when the value of the layer resource unit assignment field is 1, it indicates that the number of all the source layers of the first user is 3, and the size of the layer frequency domain resource of the first user at each of the three source layers is RU 242. In the fifth row of Table 1, RU 484-RU 242 indicates that the number of all the source layers of the first user is 2, a size of a layer frequency domain resource of the first user at one source layer is RU 484, and a size of a layer frequency domain resource of the first user at the other source layer is RU 242. That is, when the value of the layer resource unit assignment field is 3, it indicates that the number of all the source layers of the first user is 2, the size of the layer frequency domain resource of the first user at one source layer is RU 484, and the size of the layer frequency domain resource of the first user at the other source layer is RU 242. Other values of the layer resource unit assignment field in Table 1 are similar. Details are not described herein again. It should be understood that, in this application, RUs or MRUs of different sizes are RUs or MRUs predefined in a standard, including sizes and locations. For example, an RU 2*996+484-tone MRU includes two 996-tone RUs and one 484-tone RU that are predefined in the standard.

**Table 1**

| Value of the layer resource unit assignment field | Number of all source layers of the first user and layer frequency domain resource of the first user at each source layer |
|---|---|
| 0 | RU 242-RU 242 (a size of a total frequency domain resource of the first user at all source layers is RU 484) |
| 1 | RU 242-RU 242-RU 242 (a size of a total frequency domain resource of the first user at all source layers is RU 484+RU 242) |
| 2 | RU 242-RU 242-RU 242-RU 242 (a size of a total frequency domain resource of the first user at all source layers is RU 996) |
| 3 | RU 484-RU 242 (a size of a total frequency domain resource of the first user at all source layers is RU 484+RU 242) |
| 4 | RU 484-RU 242-RU 242 (a size of a total frequency domain resource of the first user at all source layers is RU 996) |
| 5 | RU 484-RU 484 (a size of a total frequency domain resource of the first user at all source layers is RU 996) |
| 6 | RU 484-RU 484-RU 484 (a size of a total frequency domain resource of the first user at all source layers is RU 996+RU 484) |
| 7 | RU 484-RU 484-RU 484-RU 484 (a size of a total frequency domain resource of the first user at all source layers is RU 2*996) |
| 8 | RU 996-RU 484 (a size of a total frequency domain resource of the first user at all source layers is RU 996+RU 484) |
| 9 | RU 996-RU 484-RU 242 (a size of a total frequency domain resource of the first user at all source layers is RU 996+RU 484+RU 242) |
| 10 | RU 996-RU 996 (a size of a total frequency domain resource of the first user at all source layers is RU 2*996) |
| 11 | RU 996-RU 484-RU 484 (a size of a total frequency domain resource of the first user at all source layers is RU 2*996) |
| 12 | RU 996-RU 996-RU 484 (a size of a total frequency domain resource of the first user at all source layers is RU 2*996+RU 484) |
| 13 | RU 996-RU 996-RU 484-RU 484 (a size of a total frequency domain resource of the first user at all source layers is RU 3*996) |
| 14 | RU 996-RU 996-RU 996 (a size of a total frequency domain resource of the first user at all source layers is RU 3*996) |
| 15 | RU 996-RU 996-RU 996-RU 484 (a size of a total frequency domain resource of the first user at all source layers is RU 3*996+RU 484) |
| 16 | RU 996-RU 996-RU 996-RU 996 (a size of a total frequency domain resource of the first user at all source layers is RU 4*996) |

In addition to combinations in the table, there may be other combinations, for example, RU 484+242-RU 242 and RU 996+484-RU 484. Different source layers have different resource sizes. A larger resource may be allocated to an enhancement layer, so that more bits are carried in a case of a low bit rate.

For another example, when sizes of the total frequency domain resource of the first user at all the source layers are the same, values of the layer resource unit assignment field are different. For example, when the size of the total frequency domain resource of the first user at all the source layers is RU 2*996, for values of the layer resource unit assignment field, refer to Table 2. With reference to Table 2, it can be learned that, the sizes of the total frequency domain resource of the first user at all the source layers are the same, and different values of the layer resource unit assignment field may indicate different numbers of all the source layers of the first user. As shown in Table 2, when the value of the layer resource unit assignment field is 0, the number of all the source layers of the first user is 4, and a size of a layer frequency domain resource of the first user at each of the four source layers is RU 484; when the value of the layer resource unit assignment field is 1, the number of all the source layers of the first user is 2, and a size of a layer frequency domain resource of the first user at each of the two source layers is RU 996; or when the value of the layer resource unit assignment field is 2, the number of all the source layers of the first user is 3, a size of a layer frequency domain resource of the first user at one source layer is RU 996, and a size of a layer frequency domain resource of the first user at each of other source layers is RU 484. For another example, when the size of the total frequency domain resource of the first user at all the source layers is RU 3*996, for values of the layer resource unit assignment field, refer to Table 3. Descriptions of Table 3 are similar to these of Table 2. Details are not described herein again.

**Table 2**

| Value of the layer resource unit assignment field | Number of all source layers of the first user and layer frequency domain resource of the first user at each source layer |
|---|---|
| 0 | RU 484-RU 484-RU 484-RU 484 |
| 1 | RU 996-RU 996 |
| 2 | RU 996-RU 484-RU 484 |

**Table 3**

| Value of the layer resource unit assignment field | Number of all source layers of the first user and layer frequency domain resource of the first user at each source layer |
|---|---|
| 0 | RU 996-RU 996-RU 484-RU 484 |
| 1 | RU 996-RU 996-RU 996 |

For Manner 4.1, in another possible implementation, the layer resource unit assignment field includes a number of layers field and an index field, the number of layers field is located before or after the index field, the number of layers field indicates the number of all the source layers of the first user, and the index field indicates the layer frequency domain resource of the first user at each source layer. When the sizes of the total frequency domain resource of the first user at all the source layers are the same, values of the index field are different when numbers of source layers are different.

For example, with reference to Table 4, it can be learned that when the number of all the source layers of the first user is 2, a value of the index field may be any one of 0 to 4. When the value of the index field is 0, a size of a layer frequency domain resource of the first user at each of the two source layers is RU 242. When the value of the index field is 1, a size of a layer frequency domain resource of the first user at one source layer is RU 484, and a size of a layer frequency domain resource of the first user at the other source layer is RU 242. Other values of the index field in Table 4 are similar. Details are not described herein again.

**Table 4**

| Number of all source layers of the first user is 2 | Value of the index field | Layer frequency domain resource of the first user at each source layer |
|---|---|---|
| | 0 | RU 242-RU 242 (a size of a total frequency domain resource of the first user at all source layers is RU 484) |
| | 1 | RU 484-RU 242 (a size of a total frequency domain resource of the first user at all source layers is RU 484+RU 242) |
| | 2 | RU 484-RU 484 (a size of a total frequency domain resource of the first user at all source layers is RU 484+RU 484) |
| | 3 | RU 996-RU 484 (a size of a total frequency domain resource of the first user at all source layers is RU 996+RU 484) |
| | 4 | RU 996-RU 996 (a size of a total frequency domain resource of the first user at all source layers is RU 996+RU 996) |

Manner 4.2 may be understood as follows: It is pre-specified in the standard that there is a unique allocation manner for a total RU or MRU, and the layer frequency domain resource of the first user at each source layer does not need to be additionally indicated; or for a total RU or MRU, a number of layers is indicated, a unique allocation manner for a corresponding number of layers is pre-specified in the standard, and allocation of layer resource units does not need to be additionally indicated, that is, for the total RU or MRU, a number of all source layers of the first user is indicated, and the number of the source layers is different, but a layer frequency domain resource at each source layer under the number of the source layers is pre-specified in the standard. For example, if a size of a total frequency domain resource of the first user at all the source layers is RU 996, when the number of all the source layers of the first user is 2, an allocation manner in this case corresponds only to RU 484-RU 484. That is, when the number of all the source layers of the first user is 2, a size of a layer frequency domain resource of the first user at each of the two source layers is RU 484.

For example, when the layer frequency domain resource of the first user at each source layer is the predefined frequency domain resource, in a possible implementation, a number of all source layers of the first user is indicated by the second signal field of the first user, that is, the second signal field of the first user further includes a layer resource unit assignment field, and the layer resource unit assignment field indicates the number of all the source layers of the first user. In another possible implementation, a user field corresponding to the first user indicates a number of all source layers of the first user, that is, the user field corresponding to the first user further indicates the number of source layers corresponding to the first user. For example, the user field corresponding to the first user includes a number of layers field, and the number of layers field indicates the number of source layers corresponding to the first user.

When the resource unit allocation subfield indicates the total frequency domain resource, at all the source layers, of the user corresponding to each user field, the joint source and channel coding parameter of the source layer corresponding to the first user may be understood in any one of the following manners.

Manner 5.1: The joint source and channel coding parameter of the source layer corresponding to the first user includes at least one of the following: a joint source and channel coding parameter of each source layer corresponding to the first user and the j oint source and channel coding parameter shared by all the source layers of the first user. A joint source and channel coding parameter of one source layer corresponding to the first user may include at least one of the following: a modulation and coding scheme of one source layer corresponding to the first user and probability of source distribution of one source layer corresponding to the first user. That is, the PPDU includes one second signal field of the first user. It can be learned that a user that uses joint source and channel coding can better read data at a source layer by learning of a joint source and channel coding parameter required by the user.

Manner 5.2: The second signal field of the first user further includes a signal A field and a signal B field, the signal Afield is located on the total frequency domain resource of the first user at all the source layers, the signal B field is located on a layer frequency domain resource of one source layer corresponding to the first user, the signal A field indicates the joint source and channel coding parameter shared by all the source layers of the first user, and the signal B field indicates a joint source and channel coding parameter of one source layer corresponding to the first user. That is, the PPDU includes one second signal field of the first user, and there are a plurality of signal B fields, for example, a number of signal B fields is the same as a number of source layers corresponding to the first user. It can be learned that the signal A field is located on the total frequency domain resource of the first user at all the source layers, a parameter indicated by the signal Afield is a common parameter corresponding to different source layers, and the signal B field is located on the layer frequency domain resource of the source layer corresponding to the first user, that is, a parameter indicated by the signal B field is a private parameter corresponding to one source layer, so that the first user may separately read and parse a parameter required by each source layer, to reduce complexity of reading the signal field by the first user.

Manner 5.3: The joint source and channel coding parameter of the source layer corresponding to the first user is a joint source and channel coding parameter of one source layer corresponding to the first user. The j oint source and channel coding parameter of one source layer corresponding to the first user includes at least one of the following: the joint source and channel coding parameter of one source layer corresponding to the first user and the joint source and channel coding parameter shared by all the source layers of the first user. That is, the PPDU includes a plurality of second signal fields of the first user, and one second signal field of the first user indicates at least one of the following: the joint source and channel coding parameter of one source layer corresponding to the first user and the joint source and channel coding parameter shared by all the source layers of the first user. It can be learned that a user that uses joint source and channel coding can better read data at a source layer by learning of a joint source and channel coding parameter required by the user.

In a possible implementation, Manner 5.1 may be combined with Manner 4.1 or Manner 4.2. In another possible implementation, Manner 5.2 may be combined with Manner 4.1 or Manner 4.2. It should be understood that when Manner 5.2 is combined with Manner 4.1, the signal A field further indicates at least one of the following: the number of all the source layers of the first user and the layer frequency domain resource of the first user at each source layer. That is, the signal A field further includes the layer resource unit assignment field. In another possible implementation, Manner 5.3 may be combined with Manner 4.1 or Manner 4.2.

In addition, in a possible implementation, for Manner 5.1 or Manner 5.3, one second signal field of the first user further indicates identifiers of all the source layers of the first user; and for Manner 5.2, one signal B field further indicates an identifier of one source layer corresponding to the first user, which is equivalent to indicating identifiers of all the source layers of the first user by a plurality of signal B fields.

In a possible implementation, the joint source and channel coding parameter of one source layer corresponding to the first user may further include a length of a physical layer service data unit of one source layer of the first user or a number of symbols carried in a data field corresponding to one source layer of the first user. It should be understood that a number of data fields of the first user is the same as the number of source layers corresponding to the first user. It can be learned that the first user may further learn of, based on the second signal field, the length of the physical layer service data unit of the source layer or the number of symbols carried in the data field corresponding to the source layer of the first user, so that the first user can better parse data by learning of a mapping relationship between data included in one source layer and data included in all the source layers.

Optionally, the first user carries different source layers on an allocated time domain resource and/or frequency domain resource. For example, a user that uses joint source and channel coding may carry different source layers only in time domain, or may carry different source layers in both time domain and frequency domain. It can be learned that because the first user carries different source layers on the allocated time domain resource and/or frequency domain resource, time frequency resources can be better used for data transmission.

Optionally, the PPDU further includes a universal signal field, the first signal field further includes a universal signal overflow field, and the universal signal field and/or the universal signal overflow field indicate/indicates that the PPDU is a PPDU for joint source and channel transmission. That the PPDU is the PPDU for joint source and channel transmission may be indicated by a PPDU type and compression mode field in the universal signal field; that the PPDU is the PPDU for joint source and channel transmission may be indicated by B20 to B24 bits or a B25 bit of a first symbol in the universal signal field; or that the PPDU is the PPDU for joint source and channel transmission may be indicated by a B2 bit or a B8 bit of a second symbol in the universal signal field. That the PPDU is the PPDU for joint source and channel transmission may be indicated by at least one bit in the universal signal overflow field. It should be understood that the B20 to B24 bits of the first symbol in the universal signal field are disregard (Disregard) bits, the B25 bit of the first symbol in the universal signal field is a validate (Validate) bit, the B2 bit of the second symbol in the universal signal field is a validate bit, and the B8 bit of the second symbol in the universal signal field is a validate bit. After these bits indicate that the PPDU is the PPDU for joint source and channel transmission, meanings of the bits are changed, and specific names are not limited herein.

After step 501, step 502 to step 504 may be further performed. Certainly, steps 505 and 506 may be further performed. To be specific, FIG. 5 may include step 501 to step 504, FIG. 5 may include step 501, step 505, and step 506, or FIG. 5 may include step 501 to step 506. It may be understood that there is no necessary sequence of performing step 502 to step 504 and step 505 and step 506. In other words, step 502 to step 504 may be performed before either step 505 or step 506, may be performed after either step 505 or step 506, or may be performed simultaneously with either step 505 or step 506.

502: The first device sends the PPDU.

Correspondingly, the second device receives the PPDU.

503: The second device obtains, on the frequency domain resource allocated to the first user, the joint source and channel coding parameter of the source layer corresponding to the first user.

When the resource unit allocation subfield indicates the layer frequency domain resource, at each source layer, of the user corresponding to each user field, step 503 may be understood as: The second device obtains, on the layer frequency domain resource at each source layer of the first user, a joint source and channel coding parameter of the source layer. In addition, the second device may further obtain, on the layer frequency domain resource at each source layer of the first user, the joint source and channel coding parameter shared by all the source layers of the first user. It can be learned that, when the resource unit allocation subfield indicates the layer frequency domain resource, at each source layer, of the user corresponding to each user field, a user that uses joint source and channel coding can better read data at a source layer by learning of a joint source and channel coding parameter required by the user.

When the resource unit allocation subfield indicates the total frequency domain resource, at all the source layers, of the user corresponding to each user field, step 503 may be understood as any one of the following.

Manner 6.1: With reference to Manner 5.1, the second device obtains, on the total frequency domain resource of all the source layers of the first user, a joint source and channel coding parameter of each source layer corresponding to the first user. In addition, the second device may further obtain, on the total frequency domain resource at all the source layers of the first user, the joint source and channel coding parameter shared by all the source layers of the first user.

Manner 6.2: With reference to Manner 5.2, the second device obtains, on the layer frequency domain resource of each source layer of the first user, a joint source and channel coding parameter of the source layer. That is, the second device obtains, on the layer frequency domain resource of each source layer of the first user, the j oint source and channel coding parameter of the source layer by reading a corresponding signal B field. In addition, the second device may further obtain, on the total frequency domain resource at all the source layers of the first user, the joint source and channel coding parameter shared by all the source layers of the first user. That is, the second device obtains, on the total frequency domain resource of all the source layers of the first user, the joint source and channel coding parameter shared by all the source layers of the first user by reading a signal A field.

Manner 6.3: With reference to Manner 5.3, the second device obtains, on the layer frequency domain resource of each source layer of the first user, a joint source and channel coding parameter of the source layer. In addition, the second device may further obtain, on the layer frequency domain resource at each source layer of the first user, the joint source and channel coding parameter shared by all the source layers of the first user.

It can be learned that, for any one of Manner 6.1 to Manner 6.3, when the resource unit allocation subfield indicates the total frequency domain resource, at all the source layers, of the user corresponding to each user field, a user that uses joint source and channel coding can better read data at a source layer by learning of a joint source and channel coding parameter required by the user.

504: The second device performs joint source and channel decoding based on the joint source and channel coding parameter of the source layer corresponding to the first user.

For one source layer corresponding to the first user, step 504 may be understood as: The second device performs joint source and channel decoding based on the joint source and channel coding parameter of one source layer corresponding to the first user and the joint source and channel coding parameter shared by all the source layers of the first user.

505: The first device sends the PPDU.

Correspondingly, the third device receives the PPDU.

506: The user corresponding to each user field further includes the second user that does not use joint source and channel coding, and the third device obtains data on a frequency domain resource allocated to the second user.

That the third device obtains the data on the frequency domain resource allocated to the second user may be understood as follows: The third device obtains the data on the frequency domain resource allocated to the second user by using a corresponding data field.

It can be learned that, in the foregoing technical solution, the first device may allocate a frequency domain resource to both a user that uses JSCC transmission and that corresponds to each user field and a user that does not use JSCC transmission and that corresponds to each user field. In addition, for the user that uses JSCC transmission, the PPDU may further include the second signal field located on the frequency domain resource allocated to the user, and the second signal field indicates the joint source and channel coding parameter of the source layer corresponding to the user. In other words, it is indicated that, for the user that uses JSCC transmission, JSCC signal information is located in another signal field of the frequency domain resource of the user. Therefore, when reading the first signal field, the user that uses JSCC transmission does not need to read a large amount of information in a same field. This reduces complexity of reading the first signal field by the user that uses JSCC transmission. Moreover, because only the user that uses JSCC transmission can obtain JSCC signal information related to the user, and the user that does not use JSCC transmission does not need to read the JSCC signal information, the user that does not use JSCC transmission need to read fewer signal fields. This further reduces complexity of reading the signal fields by the user that does not use JSCC transmission. Besides, for the user that does not use JSCC transmission, the PPDU does not include the second signal field, that is, there is no lengthy JSCC signal information. This reduces overheads and improves a throughput rate.

FIG. 6 is a schematic flowchart of still another communication method according to an embodiment of this application. It should be understood that the embodiment in FIG. 6 is for single-user transmission. As shown in FIG. 6, the method includes but is not limited to the following steps.

601: A first device generates a PPDU, where the PPDU includes a universal signal field and a third signal field, the third signal field includes a universal signal overflow field, the universal signal field and/or the universal signal overflow field indicate/indicates that the PPDU is a PPDU for single-user joint source and channel transmission, the third signal field further includes a resource unit allocation subfield, a layer block field, and a user field corresponding to a user, the resource unit allocation subfield indicates a layer frequency domain resource, at each source layer, of the user corresponding to the user field, and the layer block field indicates a joint source and channel coding parameter of each source layer of the user corresponding to the user field.

That the PPDU is the PPDU for single-user joint source and channel transmission may be indicated by a PPDU type and compression mode field in the universal signal field; that the PPDU is the PPDU for single-user joint source and channel transmission may be indicated by B20 to B24 bits or a B25 bit of a first symbol in the universal signal field; or that the PPDU is the PPDU for single-user joint source and channel transmission may be indicated by a B2 bit or a B8 bit of a second symbol in the universal signal field. That the PPDU is the PPDU for single-user joint source and channel transmission may be indicated by at least one bit in the universal signal overflow field. It should be understood that the B20 to B24 bits of the first symbol in the universal signal field are disregard (Disregard) bits, the B25 bit of the first symbol in the universal signal field is a validate (Validate) bit, the B2 bit of the second symbol in the universal signal field is a validate bit, and the B8 bit of the second symbol in the universal signal field is a validate bit. After these bits indicate that the PPDU is the PPDU for single-user joint source and channel transmission, meanings of the bits are changed, and specific names are not limited herein.

That the resource unit allocation subfield indicates the layer frequency domain resource, at each source layer, of the user corresponding to the user field may be understood as follows: When performing resource allocation, the first device may allocate a corresponding RU or MRU to data at each source layer.

Optionally, the layer block field may include a layer field corresponding to each source layer of the user corresponding to the user field, and one layer field indicates a joint source and channel coding parameter of one source layer of the user corresponding to the user field. The joint source and channel coding parameter of one source layer of the user corresponding to the user field may include at least one of the following: a modulation and coding scheme of one source layer of the user corresponding to the user field and probability of source distribution of one source layer of the user corresponding to the user field. In a possible implementation, the joint source and channel coding parameter of one source layer of the user corresponding to the user field may further include a length of a physical layer service data unit of one source layer of the user corresponding to the user field or a number of symbols carried in a data field corresponding to one source layer of the user corresponding to the user field. It should be understood that a number of data fields of the user corresponding to the user field is the same as a number of source layers of the user corresponding to the user field.

Optionally, the third signal field further includes a joint source and channel signal field, and the joint source and channel signal field indicates a joint source and channel coding parameter shared by all source layers of the user corresponding to the user field. The j oint source and channel coding parameter shared by all the source layers of the user corresponding to the user field may include at least one of the following: a frame rate, a color coding method, a picture size, a pixel depth, a quantization step, a DCT transform or discrete wavelet transform size, a number of DCT blocks included in each code block, a number of DCT coefficient quantization bit planes, and a number of code blocks. In another possible implementation, at least one of the frame rate, the color coding method, the picture size, the pixel depth, the quantization step, the DCT transform or discrete wavelet transform size, the number of DCT blocks included in each code block, the number of DCT coefficient quantization bit planes, and the number of code blocks may be located in a frame header or a frame body of a MAC frame. The MAC frame is located in each data field of the user corresponding to the user field. It can be learned that a single user that uses joint source and channel transmission may learn of the joint source and channel coding parameter shared by all the source layers based on the joint source and channel signal field, so that the user does not need to obtain the joint source and channel coding parameter shared by all the source layers each time the user parses data at a source layer. In addition, because the joint source and channel coding parameter shared by all the source layers is included in one signal field, overheads are reduced.

602: The first device sends the PPDU.

Correspondingly, a second device receives the PPDU.

The second device may receive the PPDU from the first device. Correspondingly, the first device may send the PPDU to the second device.

603: The second device performs joint source and channel decoding based on the joint source and channel coding parameter of each source layer of the user corresponding to the user field.

For one source layer of the user corresponding to the user field, step 603 may be understood as: The second device performs joint source and channel decoding based on a joint source and channel coding parameter of one source layer of the user corresponding to the user field and the joint source and channel coding parameter shared by all the source layers of the user corresponding to the user field.

It can be learned that a single user that uses joint source and channel transmission may learn of a function of the PPDU based on the universal signal field and/or the universal signal overflow field, and further, after learning of the joint source and channel coding parameter of each source layer based on the layer block field, read data on a layer frequency domain resource at each source layer, so that the single user that uses joint source and channel transmission can obtain data at different source layers. In addition, the user may further separately read and parse a parameter required by each source layer. This reduces complexity of reading a signal field by the user. Moreover, because the PPDU includes only one user field, overheads are reduced.

The following describes several possible frame structures of a PPDU in embodiments of this application with reference to accompanying drawings. It should be noted that in this application, XT is a standard code for a future-generation standard, and a specific name is not limited.

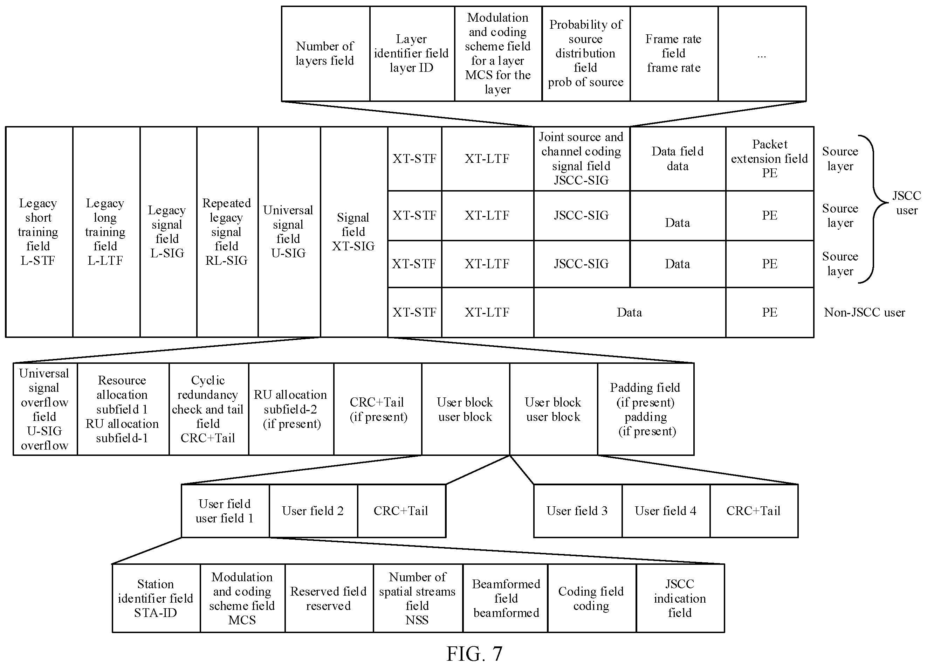

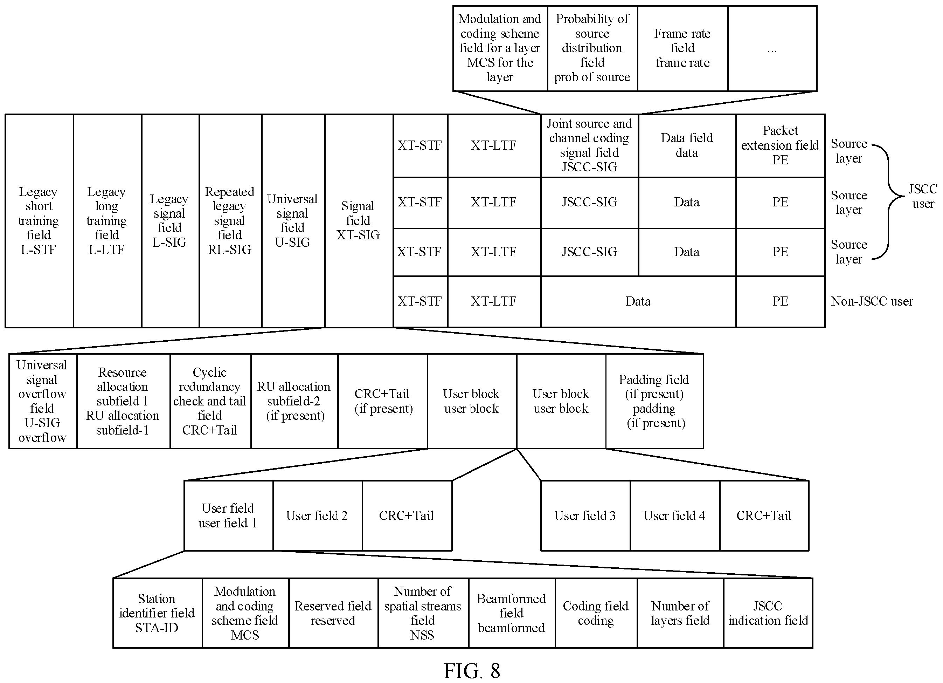

In a multi-user transmission scenario, when a resource unit allocation subfield indicates a layer frequency domain resource, at each source layer, of a user corresponding to each user field, for a frame structure of a PPDU, refer to FIG. 7 or FIG. 8. It should be understood that, in FIG. 7 or FIG. 8, one JSCC user corresponds to a plurality of user fields, and one non-JSCC user corresponds to one user field.

In a possible implementation, FIG. 7 is a frame structure of a PPDU corresponding to a case in which a resource unit allocation subfield indicates a layer frequency domain resource according to an embodiment of this application. As shown in FIG. 7, the PPDU includes at least one of the following: an XT-SIG field and a JSCC-SIG field of the JSCC user at each source layer. The PPDU may further include at least one of the following: a legacy short training field (legacy short training field, L-STF), a legacy long training field (legacy long training field, L-LTF), a legacy signal field (legacy signal field, L-SIG), a repeated legacy signal field (repeated legacy signal field, RL-SIG), a universal signal field (universal signal field, U-SIG), an XT-STF field of the JSCC user at each source layer, an XT-LTF field of the JSCC user at each source layer, a data field of the JSCC user at each source layer, a packet extension (packet extension, PE) field of the JSCC user at each source layer, an XT-STF field of the non-JSCC user at one source layer, an XT-LTF field of the non-JSCC user at one source layer, a data field of the non-JSCC user at one source layer, and a packet extension field of the non-JSCC user at one source layer. The JSCC user in FIG. 7 may be understood as the first user in FIG. 5, and the non-JSCC user in FIG. 7 may be understood as the second user in FIG. 5. The XT-SIG field in FIG. 7 is the first signal field in FIG. 5, and the JSCC-SIG field in FIG. 7 is the second signal field in FIG. 5. It should be noted that FIG. 7 is merely an example, and FIG. 7 may further include related fields of other JSCC users at different source layers, or may include related fields of other non-JSCC users at one source layer, or the like.

In FIG. 7, the XT-SIG field may further include at least one of the following: a resource unit allocation subfield 1 (RU allocation subfield-1), a resource unit allocation subfield 2 (RU allocation subfield-2) (if present if present), and at least one user block (user block) (only two user blocks are shown in FIG. 7). The XT-SIG field may further include at least one of the following: a universal signal overflow (U-SIG overflow) field, a cyclic redundancy check (cyclic redundancy check, CRC) and tail (tail) field, and cyclic redundancy check and tail field (if present) padding (padding) (if present). One user block may include at least one user field (user field) and a cyclic redundancy check and tail field, and different user blocks use different cyclic redundancy check codes. As shown in FIG. 7, a user block located after the cyclic redundancy check and tail field (if present) may include a user field 1, a user field 2, and a cyclic redundancy check and tail field, and a user block before the padding field (if present) may include a user field 3, a user field 4, and a cyclic redundancy check and tail field.

The user field may include at least one of the following: a station identifier (STA-ID) field and a modulation and coding scheme (modulation and coding scheme, MCS) field. In a possible implementation, the user field may further include a joint source and channel coding indication field, and a specific location and a length that are of the joint source and channel coding indication field are not limited. For example, in the foregoing Manner 2.2 or Manner 2.4, one user field corresponding to one JSCC user may further include the joint source and channel coding indication field. Certainly, one user field corresponding to one non-JSCC user may also include the joint source and channel coding indication field. In a possible manner, the user field may further include at least one of the following: a reserved (reserved) field, a number of spatial streams (number of spatial streams, NSS) field, a beamformed (beamformed) field, and a coding (coding) field. As shown in FIG. 7, each of the user field 1 to the user field 4 may include at least one of the following: the station identifier field and the modulation and coding scheme field, and the user field 1 to the user field 4 may further include at least one of the following: the reserved field, the number of spatial streams field, the beamformed field, and the coding field. It should be understood that FIG. 7 shows only fields included in the user field 1.

The JSCC-SIG field of the JSCC user at one source layer may further include a number of layers field and a layer identifier (layer ID) field. For example, when a number of all source layers corresponding to the JSCC user is explicitly indicated, the JSCC-SIG field of the JSCC user at one source layer may further include the number of layers field.

In addition, the JSCC-SIG field of the JSCC user at one source layer may further indicate a joint source and channel coding parameter of the JSCC user at one source layer and a joint source and channel coding parameter shared by all source layers of the JSCC user. For example, as shown in FIG. 7, the JSCC-SIG field of the JSCC user at one source layer may further include at least one of the following: a modulation and coding scheme field for the layer (MCS for the layer), a probability of source distribution (prob of source) field, a frame rate (frame rate) field, and the like. It should be understood that FIG. 7 shows only some fields included in the JSCC-SIG field of the JSCC user at one source layer.

In another possible implementation, FIG. 8 is still another frame structure of a PPDU corresponding to a case in which a resource unit allocation subfield indicates a layer frequency domain resource according to an embodiment of this application. The frame structure of the PPDU shown in FIG. 7 is similar to that shown in FIG. 8, and a difference lies in that: In the frame structure of the PPDU shown in FIG. 7, one user field corresponding to a JSCC user does not include a number of layers field, but one JSCC-SIG field corresponding to the JSCC user includes a number of layers field and a layer identifier field; and in the frame structure of the PPDU shown in FIG. 8, one user field corresponding to a JSCC user includes a number of layers field, and one JSCC-SIG field corresponding to the JSCC user does not include a number of layers field or a layer identifier field.

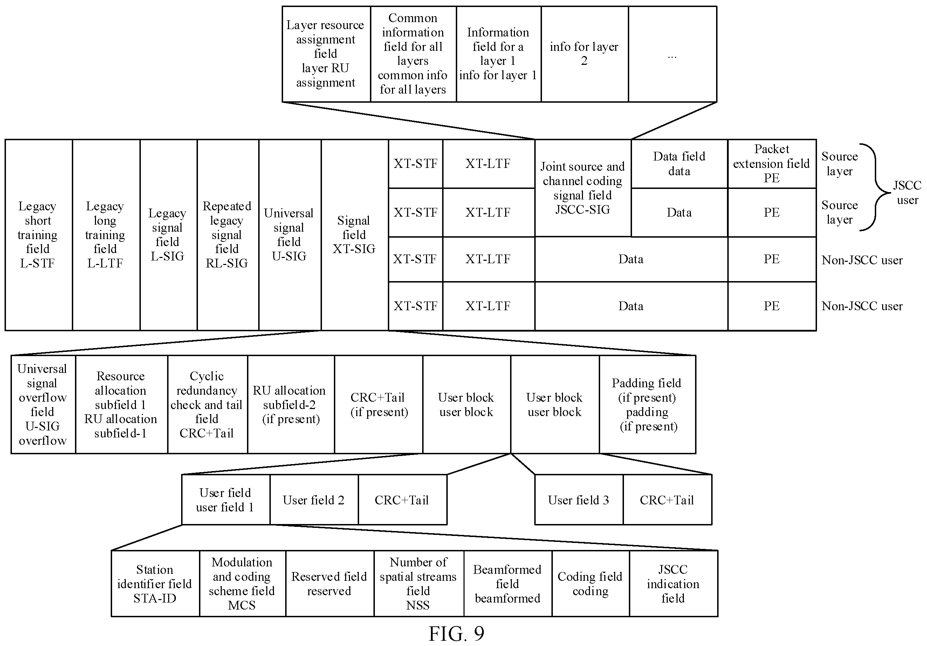

In a multi-user transmission scenario, when a resource unit allocation subfield indicates total frequency domain resource, at all source layers, of a user corresponding to each user field, for a frame structure of a PPDU, refer to any one of FIG. 9 to FIG. 13. It should be understood that, in FIG. 9 to FIG. 13, one JSCC user corresponds to one user field, and one non-JSCC user corresponds to one user field.

In a possible implementation, FIG. 9 is a frame structure of a PPDU corresponding to a case in which a resource unit allocation subfield indicates a total frequency domain resource according to an embodiment of this application. The frame structure of the PPDU shown in FIG. 7 is similar to that shown in FIG. 9, and a difference lies in the following aspects.
1. In the frame structure of the PPDU shown in FIG. 7, one JSCC user corresponds to a plurality of user fields, and one non-JSCC user corresponds to one user field; and in the frame structure of the PPDU shown in FIG. 9, one JSCC user corresponds to one user field, and one non-JSCC user corresponds to one user field.
2. In the frame structure of the PPDU shown in FIG. 7, one JSCC user corresponds to one JSCC-SIG field at one source layer, one JSCC-SIG field may include a number of layers field and a layer identifier field, one JSCC-SIG field may further indicate a joint source and channel coding parameter of the JSCC user at one source layer and a joint source and channel coding parameter shared by all source layers of the JSCC user; and in the frame structure of the PPDU shown in FIG. 9, one JSCC user corresponds to one JSCC-SIG field at all source layers, one JSCC-SIG field includes a layer resource assignment (layer RU assignment) field, and one JSCC-SIG field may further indicate a joint source and channel coding parameter of the JSCC user at each source layer and a joint source and channel coding parameter shared by all source layers of the JSCC user. As shown in FIG. 9, a common information field for all layers (common info for all layers) indicates the joint source and channel coding parameter shared by all the source layers of the JSCC user, an information field 1 for a layer (info for layer) indicates a joint source and channel coding parameter of the JSCC user at a source layer 1, and an information field 2 for a layer (info for layer) indicates a joint source and channel coding parameter of the JSCC user at a source layer 2. It should be understood that FIG. 9 shows only information fields for two layers, and may further include information fields for other layers. This is not limited herein.

It should be noted that when a layer frequency domain resource of the JSCC user at each source layer is a predefined frequency domain resource, the layer resource unit assignment field in FIG. 9 may be omitted.

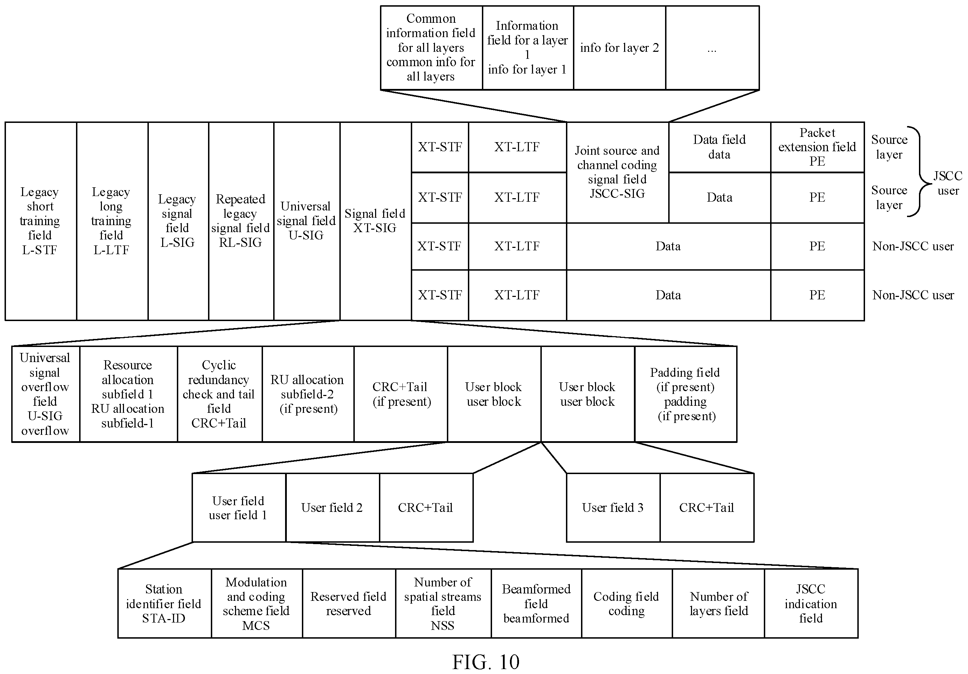

In another possible implementation, FIG. 10 is still another frame structure of a PPDU corresponding to a case in which a resource unit allocation subfield indicates a total frequency domain resource according to an embodiment of this application. The frame structure of the PPDU shown in FIG. 9 is similar to that shown in FIG. 10, and a difference lies in that: In the frame structure of the PPDU shown in FIG. 8, a user field corresponding to a JSCC user does not include a number of layers field, but a JSCC-SIG field corresponding to the JSCC user includes a layer resource unit assignment field; and in the frame structure of the PPDU shown in FIG. 10, a user field corresponding to a JSCC user includes a number of layers field, and a JSCC-SIG field corresponding to the JSCC user does not include a layer resource unit assignment field.

It should be noted that when a layer frequency domain resource of the JSCC user at each source layer is a predefined frequency domain resource, the number of layers field in FIG. 10 may be omitted.

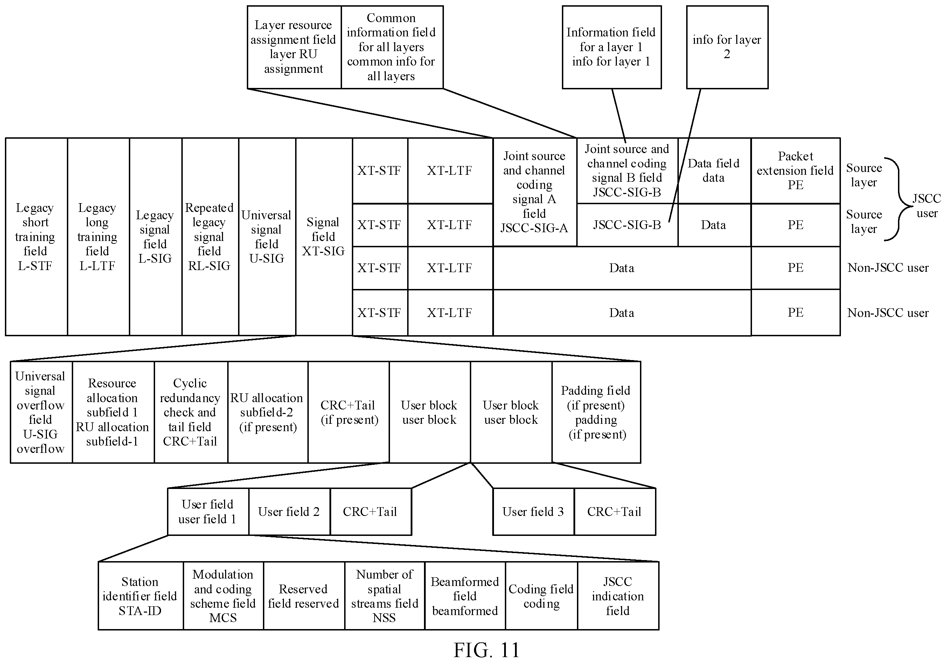

In another possible implementation, FIG. 11 is still another frame structure of a PPDU corresponding to a case in which a resource unit allocation subfield indicates a total frequency domain resource according to an embodiment of this application. The frame structure of the PPDU shown in FIG. 11 is similar to that shown in FIG. 9, and a difference lies in that: In the frame structure of the PPDU shown in FIG. 9, one JSCC user corresponds to one JSCC-SIG field at all source layers, one JSCC-SIG field may include a layer resource unit assignment field, and one JSCC-SIG field may further indicate a j oint source and channel coding parameter of the JSCC user at each source layer and a joint source and channel coding parameter shared by all the source layers of the JSCC user; and in the frame structure of the PPDU shown in FIG. 11, one JSCC user corresponds to one JSCC-SIG-A field at all source layers, one JSCC user corresponds to one JSCC-SIG-B field at one source layer, the JSCC-SIG-A field may include a layer resource unit assignment field, the JSCC-SIG-A field indicates a joint source and channel coding parameter shared by all the source layers of the JSCC user, and one JSCC-SIG-B field indicates a joint source and channel coding parameter of the JSCC user at one source layer.

It should be noted that when a layer frequency domain resource of the JSCC user at each source layer is a predefined frequency domain resource, the layer resource unit assignment field in FIG. 11 may be omitted.

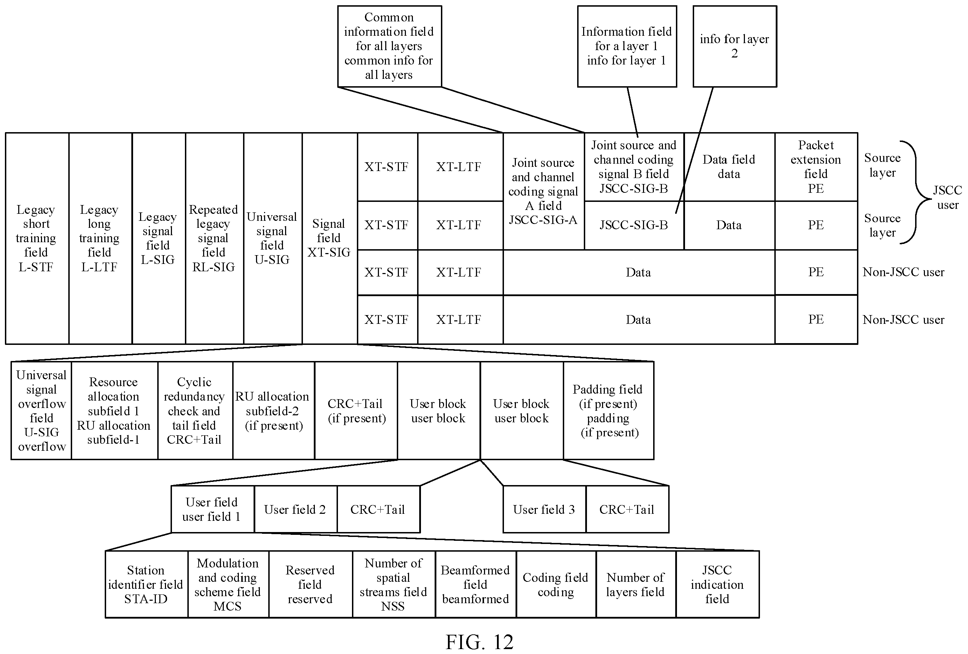

In another possible implementation, FIG. 12 is still another frame structure of a PPDU corresponding to a case in which a resource unit allocation subfield indicates a total frequency domain resource according to an embodiment of this application. The frame structure of the PPDU shown in FIG. 12 is similar to that shown in FIG. 11, and a difference lies in that: In the frame structure of the PPDU shown in FIG. 11, a user field corresponding to a JSCC user does not include a number of layers field, but a JSCC-SIG-A field corresponding to the JSCC user includes a layer resource unit assignment field; and in the frame structure of the PPDU shown in FIG. 12, a user field corresponding to a JSCC user includes a number of layers field, and a JSCC-SIG-A field corresponding to the JSCC user does not include a layer resource unit assignment field.

It should be noted that when a layer frequency domain resource of the JSCC user at each source layer is a predefined frequency domain resource, the number of layers field in FIG. 12 may be omitted.

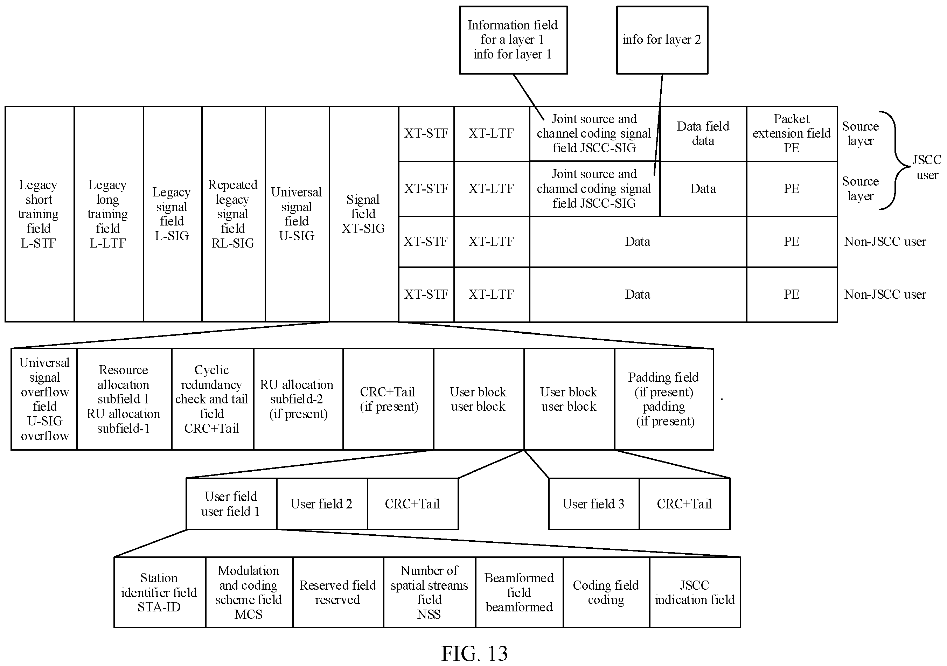

In another possible implementation, FIG. 13 is still another frame structure of a PPDU corresponding to a case in which a resource unit allocation subfield indicates a total frequency domain resource according to an embodiment of this application. The frame structure of the PPDU shown in FIG. 13 is similar to that shown in FIG. 9, and a difference lies in that: In the frame structure of the PPDU shown in FIG. 9, one JSCC user corresponds to one JSCC-SIG field at all source layers, one JSCC-SIG field includes a layer resource assignment (layer RU assignment) field, and one JSCC-SIG field may further indicate a joint source and channel coding parameter of the JSCC user at each source layer and a joint source and channel coding parameter shared by all the source layers of the JSCC user; and in the frame structure of the PPDU shown in FIG. 13, one JSCC user corresponds to one JSCC-SIG field at each source layer, one JSCC-SIG field does not include a layer resource assignment (layer RU assignment) field, one JSCC-SIG field may further indicate a joint source and channel coding parameter of the JSCC user at one source layer, for example, one JSCC-SIG field includes an information field 1 for a layer, where the information field 1 for the layer indicates a joint source and channel coding parameter of the JSCC user at a source layer 1, and one JSCC-SIG field may further indicate a joint source and channel coding parameter shared by all source layers of the JSCC user.

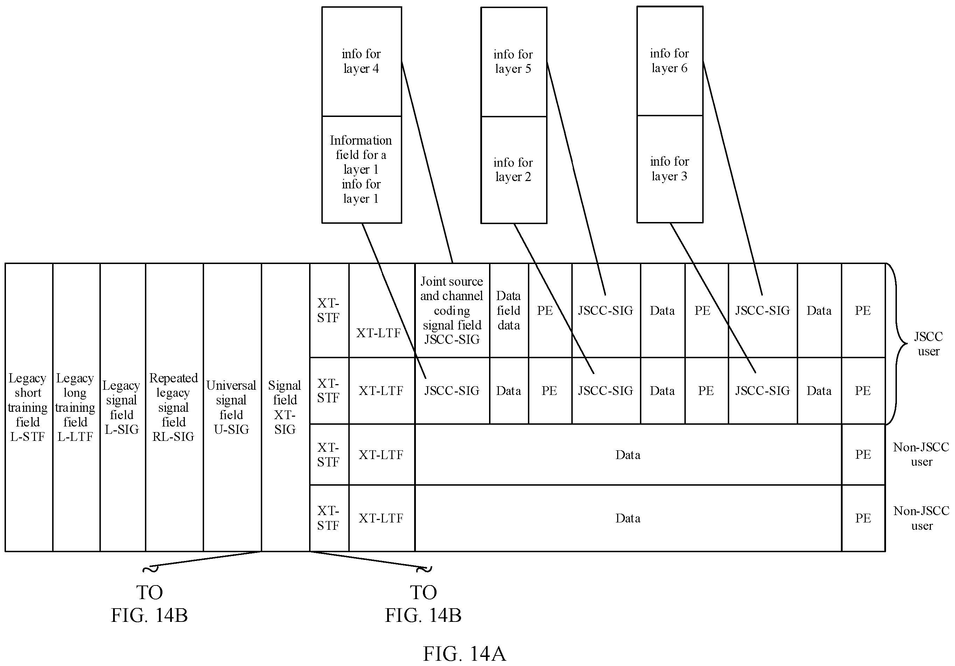

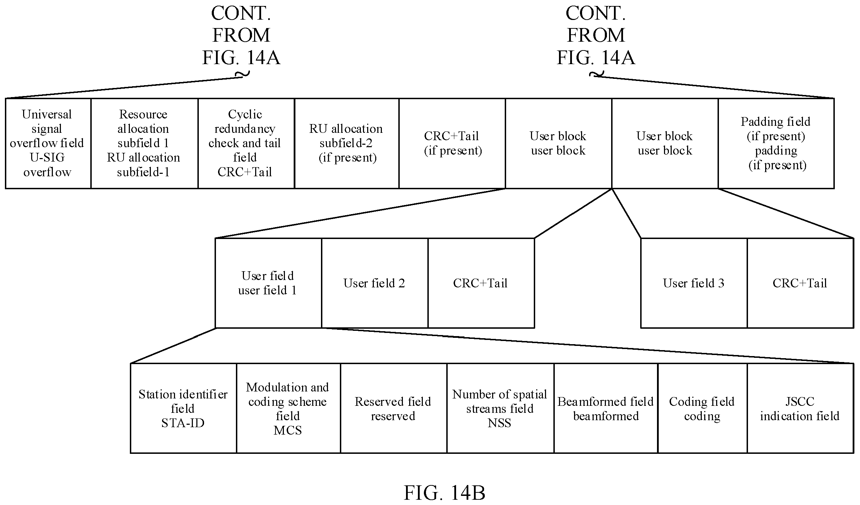

For a multi-user transmission scenario, when a user carries different source layers on an allocated time domain resource and/or frequency domain resource, for a frame structure of a PPDU, refer to FIG. 14A and FIG. 14B. FIG. 14A and FIG. 14B are a frame structure of a PPDU corresponding to a case in which different source layers are carried on a time frequency resource according to an embodiment of this application. The frame structure of the PPDU shown in FIG. 14A and FIG. 14B is similar to that shown in FIG. 13, and a difference lies in that: In the frame structure of the PPDU shown in FIG. 13, one JSCC user carries only one source layer on a time frequency resource; and in the frame structure of the PPDU shown in FIG. 14A and FIG. 14B, one JSCC user carries different source layers on a time frequency resource.

In addition, for FIG. 7 to FIG. 13, one JSCC user may carry different source layers on a time frequency resource, and no example of a frame structure of a PPDU is provided.

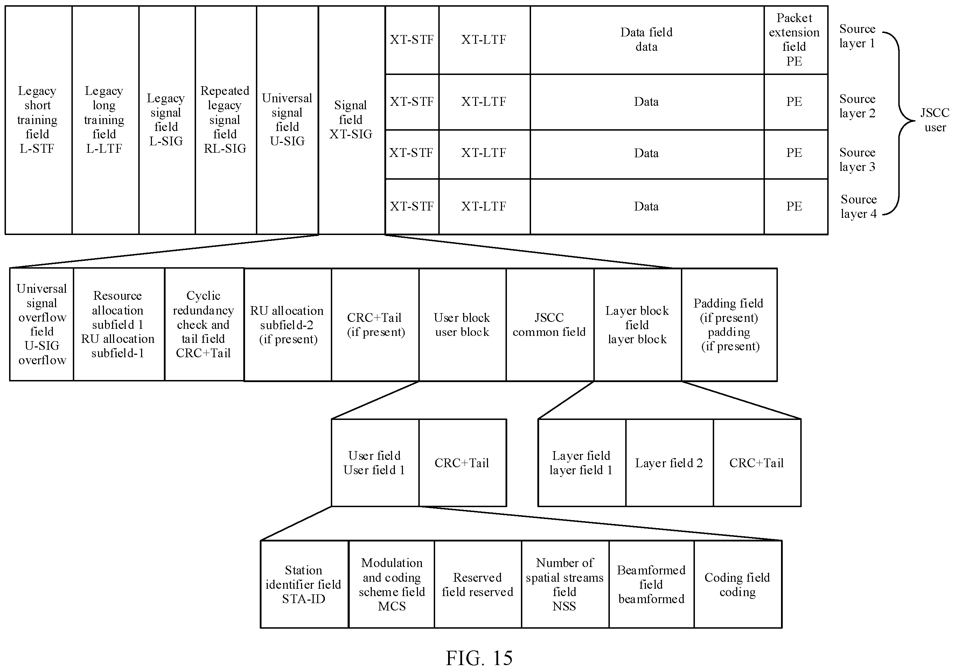

For a frame structure of a PPDU in a single-user transmission scenario, refer to FIG. 15. FIG. 15 is a frame structure of a PPDU in a single-user transmission scenario according to an embodiment of this application. A single user is a JSCC user. The frame structure of the PPDU shown in FIG. 15 is similar to that shown in FIG. 7, and a difference lies in the following aspects.
1. The frame structure of the PPDU shown in FIG. 7 includes an XT-SIG field, a JSCC-SIG field of a JSCC user at each source layer, an XT-STF field of a non-JSCC user at one source layer, an XT-LTF field of the non-JSCC user at one source layer, a data field of the non-JSCC user at one source layer, and a packet extension field of the non-JSCC user at one source layer; and the frame structure of the PPDU shown in FIG. 15 does not include an XT-SIG field, an XT-STF field of a non-JSCC user at one source layer, an XT-LTF field of the non-JSCC user at one source layer, a data field of the non-JSCC user at one source layer, or a packet extension field of the non-JSCC user at one source layer.
2. The frame structure of the PPDU shown in FIG. 7 includes at least one user block, and one user block may include at least one user field; and the frame structure of the PPDU shown in FIG. 15 includes one user block, and one user block includes one user field.
3. The frame structure of the PPDU shown in FIG. 7 does not include a JSCC common field or a layer block (layer block) field; and the frame structure of the PPDU shown in FIG. 15 includes a JSCC common field and a layer block field, the JSCC common field is the joint source and channel signal field in FIG. 6, the layer block field may include at least one layer field (layer field) and a cyclic redundancy check and tail field, and the layer field indicates a joint source and channel coding parameter of a user corresponding to one user field at one source layer. As shown in FIG. 15, the layer block field may include a layer block field 1 and a layer block field 2, the layer block field 1 indicates a joint source and channel coding parameter of a user corresponding to one user field at a source layer 1, and the layer block field 2 indicates a joint source and channel coding parameter of a user corresponding to one user field at a source layer 2.
4. In the frame structure of the PPDU shown in FIG. 7, a universal signal field and/or a universal signal overflow field indicate/indicates that the PPDU is a PPDU for joint source and channel transmission; and in the frame structure of the PPDU shown in FIG. 15, a universal signal field and/or a universal signal overflow field indicate/indicates that the PPDU is a PPDU for single-user joint source and channel transmission.

It should be noted that an XT-SIG field in FIG. 15 is the third signal field in FIG. 6.

The foregoing mainly describes the solutions provided in this application from a perspective of interaction between devices. It may be understood that, to implement the foregoing functions, the foregoing devices include corresponding hardware structures and/or software modules for performing the functions. A person skilled in the art should easily be aware that, in combination with units and algorithm steps of examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, an AP or a STA may be divided into functional modules based on the foregoing method examples. For example, the AP or the STA may be divided into functional modules corresponding to functions, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used.

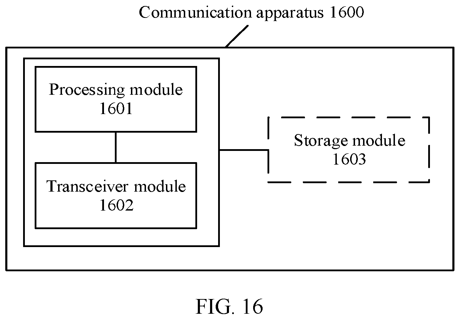

When an integrated module is used, FIG. 16 is a diagram of a structure of a communication apparatus according to an embodiment of this application. A communication apparatus 1600 may be used in methods shown in FIG. 5 and FIG. 6. As shown in FIG. 16, the communication apparatus 1600 includes a processing module 1601 and a transceiver module 1602. The processing module 1601 may be one or more processors, and the transceiver module 1602 may be a transceiver or a communication interface. The communication apparatus may be configured to implement functions of an AP or a STA in any one of the foregoing method embodiments, or may be configured to implement functions of a network element in any one of the foregoing method embodiments. The network element or network function may be a network element in a hardware device, a software function running on dedicated hardware, or a virtualization function instantiated on a platform (for example, a cloud platform). Optionally, the communication apparatus 1600 may further include a storage module 1603 that is configured to store program code and data of the communication apparatus 1600.

In an example, when the communication apparatus is used as a STA or a chip used in a STA, and performs steps performed by the STA in the foregoing method embodiments, the transceiver module 1602 is configured to support communication with an AP and the like, and the transceiver module specifically performs sending and/or receiving actions performed by the STA in FIG. 5 and FIG. 6, for example, the transceiver module 1602 supports the STA in performing step 502 and/or another process of the technology described in this specification; and the processing module 1601 may be configured to support the communication apparatus 1600 in performing processing actions in the foregoing method embodiments, for example, the processing module 1601 supports the STA in performing step 503 and/or another process of the technology described in this specification.

For example, the transceiver module 1602 is configured to receive a physical layer protocol data unit PPDU, where the PPDU includes a first signal field, the first signal field includes a resource unit allocation subfield and at least one user field corresponding to each user, the resource unit allocation subfield indicates a frequency domain resource allocated to the user corresponding to each user field, the user corresponding to each user field includes a first user that uses joint source and channel coding, the PPDU further includes a second signal field of the first user, the second signal field of the first user indicates a joint source and channel coding parameter of a source layer corresponding to the first user, and the second signal field of the first user is located on a frequency domain resource allocated to the first user; the processing module 1601 is configured to obtain, on the frequency domain resource allocated to the first user, the joint source and channel coding parameter of the source layer corresponding to the first user; and the processing module 1601 is further configured to perform j oint source and channel decoding based on the joint source and channel coding parameter of the source layer corresponding to the first user.

For another example, the transceiver module 1602 is configured to receive a physical layer protocol data unit PPDU, where the PPDU includes a universal signal field and a third signal field, the third signal field includes a universal signal overflow field, the universal signal field and/or the universal signal overflow field indicate/indicates that the PPDU is a PPDU for single-user joint source and channel transmission, the third signal field further includes a resource unit allocation subfield, a layer block field, and a user field corresponding to a user, the resource unit allocation subfield indicates a layer frequency domain resource, at each source layer, of the user corresponding to the user field, and the layer block field indicates a joint source and channel coding parameter of each source layer of the user corresponding to the user field; and the processing module 1601 is configured to perform j oint source and channel decoding based on the j oint source and channel coding parameter of each source layer of the user corresponding to the user field.

In an example, when the communication apparatus is used as an AP or a chip used in an AP, and performs steps performed by the AP in the foregoing method embodiments, the transceiver module 1602 is configured to support communication with a STA and the like, and the transceiver module specifically performs sending and/or receiving actions performed by the AP in FIG. 5 and FIG. 6, for example, the transceiver module 1602 supports the AP in performing step 501 and/or another process of the technology described in this specification; and the processing module 1601 may be configured to support the communication apparatus 1600 in performing processing actions in the foregoing method embodiments, for example, the processing module 1601 supports the AP in performing another process of the technology described in this specification.

For example, the processing module 1601 is configured to generate a physical layer protocol data unit PPDU, where the PPDU includes a first signal field, the first signal field includes a resource unit allocation subfield and at least one user field corresponding to each user, the resource unit allocation subfield indicates a frequency domain resource allocated to the user corresponding to each user field, and the user corresponding to each user field includes a first user that uses joint source and channel coding; the PPDU further includes a second signal field of the first user, where the second signal field of the first user indicates a joint source and channel coding parameter of a source layer corresponding to the first user, and the second signal field of the first user is located on a frequency domain resource allocated to the first user; and the transceiver module 1602 is configured to send the PPDU.

For another example, the processing module 1601 is configured to generate a physical layer protocol data unit PPDU, where the PPDU includes a universal signal field and a third signal field, the third signal field includes a universal signal overflow field, the universal signal field and/or the universal signal overflow field indicate/indicates that the PPDU is a PPDU for single-user joint source and channel transmission, the third signal field further includes a resource unit allocation subfield, a layer block field, and a user field corresponding to a user, the resource unit allocation subfield indicates a layer frequency domain resource, at each source layer, of the user corresponding to the user field, and the layer block field indicates a joint source and channel coding parameter of each source layer of the user corresponding to the user field; and the transceiver module 1602 is configured to send the PPDU.

In a possible implementation, when the STA or the AP is a chip, the transceiver module 1602 may be an input/output interface, a pin, a circuit, or the like. For example, the input/output interface may be configured to input to-be-processed data to a logic circuit, and may output a processing result of the logic circuit to the outside. During specific implementation, the input/output interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The input/output interface is connected to a processor through a bus.

The processing module 1601 may be a logic circuit, and the logic circuit may execute stored instructions, to enable the chip to perform the method in any one of embodiments shown in FIG. 5 and FIG. 6. It may be understood that the instructions may be stored in the storage module.

The storage module may be a storage module inside the chip, for example, a register or a cache. Alternatively, the storage module may be a storage module located outside the chip, for example, a read-only memory (Read-Only Memory, ROM), another type of static storage device that can store static information and instructions, or a random access memory (Random Access Memory, RAM).

It should be noted that a function corresponding to each of the logic circuit and the input/output interface may be implemented by using a hardware design, may be implemented by using a software design, or may be implemented by a combination of software and hardware. This is not limited herein.

An embodiment of this application further provides a communication apparatus, including a processor and a transceiver. The processor is configured to support the communication apparatus in performing any one of embodiments shown in FIG. 5 and FIG. 6. The transceiver is configured to support communication between the communication apparatus and another communication apparatus other than the communication apparatus. The communication apparatus may further include a memory, the memory is configured to be coupled to the processor, and the memory stores program instructions and data that are necessary for the communication apparatus. The transceiver may be integrated into the communication apparatus or independent of the communication apparatus. This is not limited herein. For example, in a distributed scenario, the transceiver may be disposed remotely independent of the communication apparatus.

An embodiment of this application further provides a chip. The chip includes at least one logic circuit and an input/output interface. The logic circuit is configured to read and execute stored instructions, and when the instructions are run, the chip is enabled to perform any one of embodiments shown in FIG. 5 and FIG. 6.

An embodiment of this application further provides a computer-readable storage medium. The computer-readable storage medium stores a computer program, the computer program includes program instructions, and when the program instructions are executed by a computer, the computer is enabled to perform any one of embodiments shown in FIG. 5 and FIG. 6.

An embodiment of this application further provides a computer program product including instructions. When the computer program product runs on a computer, the computer is enabled to implement any one of embodiments shown in FIG. 5 and FIG. 6.

The foregoing units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments of this application. In addition, network element units in embodiments of this application may be integrated into one processing unit, each of the units may exist alone physically, or two or more units are integrated into one unit. The integrated unit may be implemented in a form of hardware, or may be implemented in a form of a software network element unit.

When the integrated unit is implemented in the form of the software network element unit and sold or used as an independent product, the integrated unit may be stored in a computer-readable storage medium. Based on such an understanding, an essentially contributing part in the technical solutions of this application, or all or some of the technical solutions may be embodied in a form of a software product. The computer software product is stored in a storage medium, and includes several instructions for instructing a computer device (which may be a personal computer, a terminal device, a cloud server, a network device, or the like) to perform all or some of the steps of the method described in the foregoing embodiment of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
generating a physical layer protocol data unit PPDU, wherein the PPDU comprises a first signal field, the first signal field comprises a resource unit allocation subfield and at least one user field corresponding to each user, the resource unit allocation subfield indicates a frequency domain resource allocated to the user corresponding to each user field, and the user corresponding to each user field comprises a first user that uses joint source and channel coding; and
the PPDU further comprises a second signal field of the first user, the second signal field of the first user indicates a joint source and channel coding parameter of a source layer corresponding to the first user, and the second signal field of the first user is on a frequency domain resource allocated to the first user; and
sending the PPDU.

2. A communication method, wherein the method comprises:
receiving a physical layer protocol data unit PPDU, wherein the PPDU comprises a first signal field, the first signal field comprises a resource unit allocation subfield and at least one user field corresponding to each user, the resource unit allocation subfield indicates a frequency domain resource allocated to the user corresponding to each user field, and the user corresponding to each user field comprises a first user that uses joint source and channel coding; and
the PPDU further comprises a second signal field of the first user, the second signal field of the first user indicates a joint source and channel coding parameter of a source layer corresponding to the first user, and the second signal field of the first user is located on a frequency domain resource allocated to the first user;
obtaining, on the frequency domain resource allocated to the first user, the joint source and channel coding parameter of the source layer corresponding to the first user; and
performing joint source and channel decoding based on the joint source and channel coding parameter of the source layer corresponding to the first user.

3. The method according to claim 1 or 2, wherein the first signal field further comprises indication information indicating that the first user uses joint source and channel coding transmission.

4. The method according to claim 3, wherein the indication information indicating that the first user uses joint source and channel coding transmission is in a user field corresponding to the first user.

5. The method according to claim 4, wherein the user field corresponding to the first user further comprises a modulation and coding scheme field, and the modulation and coding scheme field indicates that the first user uses joint source and channel coding transmission.

6. The method according to any one of claims 1 to 5, wherein the resource unit allocation subfield indicates a layer frequency domain resource, at each source layer, of the user corresponding to each user field.

7. The method according to any one of claims 1 to 6, wherein user fields corresponding to different source layers of the first user use a same station identifier field.

8. The method according to claim 7, wherein a number of source layers of the first user is equal to a number of user fields that use the same station identifier field, and the station identifier field indicates the first user.

9. The method according to any one of claims 1 to 7, wherein the second signal field of the first user further indicates at least one of the following: a number of all source layers of the first user and an identifier of one source layer corresponding to the first user.

10. The method according to any one of claims 1 to 9, wherein the joint source and channel coding parameter of the source layer corresponding to the first user comprises at least one of the following: a joint source and channel coding parameter of one source layer corresponding to the first user and a joint source and channel coding parameter shared by all the source layers of the first user.

11. The method according to any one of claims 1 to 5, wherein the resource unit allocation subfield indicates a total frequency domain resource, at all source layers, of the user corresponding to each user field.

12. The method according to claim 10 or 11, wherein the second signal field of the first user further comprises a layer resource unit assignment field, and the layer resource unit assignment field indicates at least one of the following: the number of all the source layers of the first user and a layer frequency domain resource of the first user at each source layer.

13. The method according to claim 10 or 11, wherein a layer frequency domain resource of the first user at each source layer is a predefined frequency domain resource.

14. The method according to claim 12 or 13, wherein the joint source and channel coding parameter of the source layer corresponding to the first user comprises at least one of the following: a joint source and channel coding parameter of each source layer corresponding to the first user and the joint source and channel coding parameter shared by all the source layers of the first user.

15. The method according to claim 12 or 13, wherein the second signal field of the first user further comprises a signal A field and a signal B field, the signal A field is located on the total frequency domain resource of the first user at all the source layers, and the signal B field is located on a layer frequency domain resource of one source layer corresponding to the first user; and
the signal A field indicates the joint source and channel coding parameter shared by all the source layers of the first user, and the signal B field indicates the joint source and channel coding parameter of the one source layer corresponding to the first user.

16. The method according to claim 10, 14, or 15, wherein the joint source and channel coding parameter of one source layer corresponding to the first user further comprises a length of a physical layer service data unit of one source layer of the first user or a number of symbols carried in a data field corresponding to one source layer of the first user.

17. The method according to any one of claims 1 to 16, wherein the first user carries different source layers on an allocated time domain resource and/or frequency domain resource.

18. The method according to any one of claims 1 to 17, wherein the PPDU further comprises a universal signal field, the first signal field further comprises a universal signal overflow field, and the universal signal field and/or the universal signal overflow field indicate/indicates that the PPDU is a PPDU for joint source and channel transmission.

19. A communication method, wherein the method comprises:
generating a physical layer protocol data unit PPDU, wherein the PPDU comprises a universal signal field and a third signal field, the third signal field comprises a universal signal overflow field, the universal signal field and/or the universal signal overflow field indicate/indicates that the PPDU is a PPDU for single-user j oint source and channel transmission, the third signal field further comprises a resource unit allocation subfield, a layer block field, and one user field corresponding to a user, the resource unit allocation subfield indicates a layer frequency domain resource, at each source layer, of the user corresponding to the user field, and the layer block field indicates a joint source and channel coding parameter of each source layer of the user corresponding to the user field; and
sending the PPDU.

20. A communication method, wherein the method comprises:
receiving a physical layer protocol data unit PPDU, wherein the PPDU comprises a universal signal field and a third signal field, the third signal field comprises a universal signal overflow field, the universal signal field and/or the universal signal overflow field indicate/indicates that the PPDU is a PPDU for single-user j oint source and channel transmission, the third signal field further comprises a resource unit allocation subfield, a layer block field, and one user field corresponding to a user, the resource unit allocation subfield indicates a layer frequency domain resource, at each source layer, of the user corresponding to the user field, and the layer block field indicates a joint source and channel coding parameter of each source layer of the user corresponding to the user field; and
performing joint source and channel decoding based on the joint source and channel coding parameter of each source layer of the user corresponding to the user field.

21. The method according to claim 19 or 20, wherein the third signal field further comprises a joint source and channel signal field, and the joint source and channel signal field indicates a joint source and channel coding parameter shared by all source layers of the user corresponding to the user field.

22. A communication apparatus, wherein the apparatus comprises a processing module and a transceiver module, wherein
the processing module is configured to generate a physical layer protocol data unit PPDU, wherein the PPDU comprises a first signal field, the first signal field comprises a resource unit allocation subfield and at least one user field corresponding to each user, the resource unit allocation subfield indicates a frequency domain resource allocated to the user corresponding to each user field, and the user corresponding to each user field comprises a first user that uses joint source and channel coding; and
the PPDU further comprises a second signal field of the first user, the second signal field of the first user indicates a joint source and channel coding parameter of a source layer corresponding to the first user, and the second signal field of the first user is located on a frequency domain resource allocated to the first user; and
the transceiver module is configured to send the PPDU.

23. A communication apparatus, wherein the apparatus comprises a processing module and a transceiver module, wherein
the transceiver module is configured to receive a physical layer protocol data unit PPDU, wherein the PPDU comprises a first signal field, the first signal field comprises a resource unit allocation subfield and at least one user field corresponding to each user, the resource unit allocation subfield indicates a frequency domain resource allocated to the user corresponding to each user field, and the user corresponding to each user field comprises a first user that uses joint source and channel coding; and
the PPDU further comprises a second signal field of the first user, the second signal field of the first user indicates a joint source and channel coding parameter of a source layer corresponding to the first user, and the second signal field of the first user is located on a frequency domain resource allocated to the first user;
the processing module is configured to obtain, on the frequency domain resource allocated to the first user, the joint source and channel coding parameter of the source layer corresponding to the first user; and
the processing module is further configured to perform joint source and channel decoding based on the joint source and channel coding parameter of the source layer corresponding to the first user.

24. A communication apparatus, wherein the apparatus comprises a processing module and a transceiver module, wherein
the processing module is configured to generate a physical layer protocol data unit PPDU, wherein the PPDU comprises a universal signal field and a third signal field, the third signal field comprises a universal signal overflow field, the universal signal field and/or the universal signal overflow field indicate/indicates that the PPDU is a PPDU for single-user joint source and channel transmission, the third signal field further comprises a resource unit allocation subfield, a layer block field, and one user field corresponding to a user, the resource unit allocation subfield indicates a layer frequency domain resource, at each source layer, of the user corresponding to the user field, and the layer block field indicates a joint source and channel coding parameter of each source layer of the user corresponding to the user field; and
the transceiver module is configured to send the PPDU.

25. A communication apparatus, wherein the apparatus comprises a processing module and a transceiver module, wherein
the transceiver module is configured to receive a physical layer protocol data unit PPDU, wherein the PPDU comprises a universal signal field and a third signal field, the third signal field comprises a universal signal overflow field, the universal signal field and/or the universal signal overflow field indicate/indicates that the PPDU is a PPDU for single-user joint source and channel transmission, the third signal field further comprises a resource unit allocation subfield, a layer block field, and one user field corresponding to a user, the resource unit allocation subfield indicates a layer frequency domain resource, at each source layer, of the user corresponding to the user field, and the layer block field indicates a joint source and channel coding parameter of each source layer of the user corresponding to the user field; and
the processing module is configured to perform joint source and channel decoding based on the joint source and channel coding parameter of each source layer of the user corresponding to the user field.

26. A chip, wherein the chip comprises at least one logic circuit and an input/output interface, the logic circuit is configured to read and execute stored instructions, and when the instructions are run, the chip is enabled to perform the method according to any one of claims 1 to 21.

27. A computer-readable storage medium, wherein the computer-readable storage medium stores a computer program, the computer program comprises program instructions, and when the program instructions are executed by a computer, the computer is enabled to perform the method according to any one of claims 1 to 21.
